# EUROPÄISCHE PATENTSCHRIFT

(11) **EP 3 658 319 B1**
(45) Veröffentlichungstag und Bekanntmachung des Hinweises auf die Patenterteilung: **01.11.2023**
(21) Anmeldenummer: 18746927.5
(22) Anmeldetag: 27.07.2018
(51) Int. Cl.: B23B 29/034

(54) **ZERSPANUNGSWERKZEUG UND VERFAHREN ZUM BEARBEITEN EINER LAGERGASSE**
CUTTING TOOL AND METHOD FOR MACHINING A BEARING RACE
OUTIL D'USINAGE PAR ENLÈVEMENT DE COPEAUX ET PROCÉDÉ POUR L'USINAGE D'UNE ROULEMENT D'UN PALIER

(30) Priorität: 28.07.2017 DE 102017213046
(43) Veröffentlichungstag der Anmeldung: 03.06.2020
(73) Patentinhaber: Gühring KG, 72458 Albstadt (DE)
(72) Erfinder: HECKEL, Gerd, 90617 Puschendorf (DE); HOLLFELDER, Hans-Peter, 90768 Fürth (DE); THANNER, Jürgen, 91161 Hilpoltstein (DE)
(74) Vertreter: Winter, Brandl - Partnerschaft mbB
(86) Internationale Anmeldenummer: PCT/EP2018/070397
(87) Internationale Veröffentlichungsnummer: WO 2019/020784

(56) Entgegenhaltungen:
- EP-A1- 1 084 783
- EP-A2- 0 382 474
- DE-A1-102014 019 175
- FR-A- 1 034 115
- JP-A- 2016 074 056
- JP-U- H0 359 109
- US-A- 914 328
- US-A- 3 314 313
- US-A- 3 405 049
- US-A- 4 289 431
- US-A1- 2011 303 057

## Beschreibung

Die Erfindung betrifft ein Zerspanungswerkzeug und ein Verfahren zum Bearbeiten einer Lagergasse gemäß Oberbegriff der unabhängigen Ansprüche.

Ein gattungsgemäßes Zerspanungswerkzeug ist beispielsweise aus der DE 100 52 376 A1 bekannt. Das in der Druckschrift gezeigte Zerspanungswerkzeug hat einen um eine Drehachse antreibbaren Grundkörper (Grundhalter) und eine den Grundkörper verlängernde werkzeugmaschinenseitige Schnittstelle mit einem HSK (Hohlschaftkegel)-Schaft. In einer Ausgestaltung des Zerspanungswerkzeugs ist ein mit einer Schneidplatte (Werkzeug) bestückter Schneidenträger (Werkzeughalter) in einer außenumfangsseitig offenen Aufnahmetasche am Grundkörper gelagert, während in einer anderen Ausgestaltung zwei jeweils mit einer Schneidplatte bestückte Schneidenträger axial versetzt jeweils in einer außenumfangsseitig offenen Aufnahmetasche am Grundkörper gelagert sind. Zum Ausgleich eines Schneidenverschlei-ßes ist jeder Schneidenträger radial einstellbar. Eine zu diesem Zweck vorgesehene Stelleinrichtung ist aus einer im Grundkörper längsverschiebbar angeordneten Stellstange (Einstelldorn) und einem Stellelement (Druckelement) gebildet, das sich mit einem ersten Ende an einer Steuerfläche an der Stellstange und mit seinem zweiten Ende am Schneidenträger abstützt. Bei einer mittels einer stirnseitig betätigbaren Einstellschraube veranlassten axialen Verschiebung der Stellstange wird der oder werden die Schneidenträger über ein durch die zugeordnete Steuerfläche der Stellstange und das jeweilige Stellelement gebildetes Keilflächengetriebe radial nach au-ßen verdrängt.

Weitere, auf einem ähnlichen Funktionsprinzip beruhende Zerspanungswerkzeuge mit einem oder mehreren Schneidenträgern sind beispielsweise aus der DE 40 22 579 A1, WO 2004/012887 A2, EP 1 402 979 B1, WO 98/48964 A1, WO 2009/005804 A1, DE 24 05 694 A1 oder WO 2010/021284 A1 bekannt.

Bei den oben angegebenen Zerspanungswerkzeugen sind die Schneidenträger zur Feineinstellung der Schneiden oder zur Kompensation eines Schneidenverschleißes entweder durch eine elastische Verformung (vgl. z.B. DE 100 52 376 A1, EP 1 402 979 B1, WO 2009/005804 A1 und DE 24 05 694 A) oder durch eine Verschwenkung (vgl. DE 40 22 579 A1, WO 2004/012887 A2, WO 98/48964 A1 und WO 2010/021284 A1) relativ zum Grundkörper einstellbar. Zu diesem Zweck werden die Schneidenträger über eine im Grundkörper des Zerspanungswerkzeugs axial verschiebbar angeordnete Stellstange und ein im Grundkörper radial verschiebbar, zwischen einer Keilfläche an der Stellstange und dem Schneidenträger angeordnetes Stellelement radial gesteuert.

In der DE 10 2004 052 211 A1 und in der DE 10 2005 028 366 A1 wird ein mehrschneidiges Zerspanungswerkzeug (Bohrstange) vorgeschlagen, das über eine Stellstange (Zugstange) eine individuelle Nachstellung jeder der mehreren Schneiden ermöglicht. Zu diesem Zweck wird konkret vorgeschlagen, eine Einstellvorrichtung eines jeden einer Vielzahl von Schneidenträgern (Klemmhaltern) über eine Kopplungseinrichtung individuell mit der Stellstange zu verbinden. Dank der zwischen den Einstellvorrichtungen der Schneidenträger und der zentralen Stellstange angeordneten Kopplungseinrichtungen wird eine individuelle Schneidennachstellung ermöglicht, um einen Schneidenverschleiß auszugleichen.

Bei den oben diskutierten bekannten Lösungen sind jedoch weitere Einstellmöglichkeiten, die insbesondere eine von der axialen Stellung der Stellstange unabhängige, individuelle Schneidenjustierung gestatten würden, nicht vorgesehen.

Zwar kennt der Fachmann aus dem Stand der Technik verschiedene Justiereinrichtungen, die zum Ausgleich eines Schneidenverschleißes eine individuelle Verstellung eines Schneidenträgers gegenüber einem Grundkörper eines Zerspanungswerkzeugs ermöglichen. So ist beispielsweise aus der DE 196 49 143 A1 eine aus einer Differentialschraube und einer Gewindehülse gebildete Justiereinrichtung bekannt, die im Grundkörper (Schaft) eines Zerspanungswerkzeugs (Bohrstange) angeordnet ist. Die vorgeschlagene Justiereinrichtung hat jedoch einen hohen Platzbedarf und wäre zudem nicht mit einer Stellstange kombinierbar, wie sie aus den oben diskutierten Druckschriften bekannt ist.

Aus der US 4,428,704 ist weiterhin ein Zerspanungswerkzeug mit einem einen in einer außenumfangsseitig offenen Aufnahmetasche (recess) angeordneten Schneidenträger (cartridge) bekannt, der durch einen Schlitz in eine Brücke (bight portion) und zwei Schenkel (legs) unterteilt ist, von denen ein Schenkel mit einem Grundkörper (boring bar) fest verschraubt ist und der andere Schenkel eine Schneidplatte trägt und durch eine elastische Verformung relativ zu dem einen Schenkel radial einstellbar ist. Die zu diesem Zweck innerhalb des Schneidenträgers angeordnete Justiereinrichtung, die eine Differentialschraube aufweist, wirkt zwischen den gegeneinander verformbaren Schenkeln des Schneidenträgerkörpers. Die feste Verschraubung des Schneidenträgers verhindert jedoch eine radiale Einstellung des gesamten Schneidenträgers gegenüber dem Grundkörper, so dass auch die in der US 4,428,704 vorgeschlagen Justiereinrichtung nicht mit einer Stellstange kombinierbar wäre, wie sie aus den oben diskutierten Druckschriften bekannt ist.

Weitere Zerspanungswerkzeuge mit einem um die Drehachse antreibbaren Grundkörper, einem am Grundkörper radial einstellbar angeordneten Schneidenträger und einer Stelleinrichtung zur Einstellung der Lage des Schneidenträgers gegenüber dem Grundkörper, wobei der Schneidenträger in einer Führungsaussparung im Grundkörper quer zur Drehachse verschiebbar angeordnet ist, und die Stelleinrichtung eine im Grundkörper axial verschiebbar angeordnete Stellstange aufweist, an der der Schneidenträger abgestützt ist, sind in den Druckschriften JP 2016 074056 A, US 4 289 431 A, JP H03 59109 U, US 2011/303057 A1 und FR 1 034 115 A gezeigt. Das Zerspanungswerkzeug der US 4 289 431 A weist des Weiteren eine Justiereinrichtung zur Justierung der Lage des Schneidenträgers gegenüber der Stellstange auf.

Ausgehend von dem Zerspanungswerkzeug der US 4 289 431 A liegt der Erfindung die Aufgabe zugrunde, ein Zerspanungswerkzeug mit einem um eine Drehachse drehantreibbaren Grundkörper und wenigstens einem am Grundkörper radial einstellbaren Schneidenträger bereitzustellen, wobei der wenigstens eine Schneidenträger einerseits über eine im Grundkörper des Zerspanungswerkzeugs verschiebbar angeordnete Stellstange und andererseits mittels einer von einer Verschiebung der Stellstange unabhängigen Justierung derart radial einstellbar ist, dass eine präzise Einstellung der Schneide bzw. des Schneidelements des Schneidenträgers möglich ist. Es ferner Aufgabe der Erfindung, ein Zerspanungswerkzeug mit wenigstens einem radial einstellbaren Schneidenträger bereitzustellen, bei welchem die Ausgestaltung von dem Schneidenträger zugeordneter Stell- und Justiereinrichtung derart ist, dass eine hohe Anzahl von Schneidenträgern in Längsrichtung (Richtung der Drehachse) des Zerspanungswerkzeugs am Zerspanungswerkzeug vorgesehen sein kann, so dass insbesondere sämtliche oder zumindest möglichst viele Bearbeitungsschritte einer Lagergasse mit einem derartigen Zerspanungswerkzeug durchgeführt werden können. Es ist ferner Aufgabe der Erfindung, ein Verfahren zum effizienten Bearbeiten einer Lagergasse bzw. von dessen Lagerstelle(n) mittels des erfindungsgemäßen Zerspanungswerkzeugs bereitzustellen.

Die Aufgabe wird durch ein Zerspanungswerkzeug und ein Verfahren zum Bearbeiten einer Lagergasse mit den Merkmalen der unabhängigen Ansprüche 1 und 18 gelöst Vorteilhafte oder bevorzugte Weiterbildungen sind jeweils Gegenstand abhängiger Ansprüche.

Ein erfindungsgemäßes Zerspanungswerkzeug wird bevorzugt zur Bohrungsnachbearbeitung oder Bohrungsfeinbearbeitung, im Besonderen einer sogenannten Lagergasse eingesetzt. Derartige Werkzeuge werden beispielsweise in der Automobilindustrie eingesetzt, um die Bohrungen mehrerer in Reihe angeordneter Lagerstege einer Lagergasse zum Lagern einer Welle, beispielsweise einer Kurbelwelle oder Nockenwelle, auf ein Durchmesserendmaß zu bearbeiten. Das Zerspanungswerkzeug ist vorzugsweise mehrschneidig ausgebildet, um mehrere Lagerstege einer Lagergasse synchron bearbeiten zu können, wobei am Grundkörper des Zerspanungswerkzeugs mehrere Schneidenträger in Abständen der Lagerstege entsprechenden axialen Abständen, vorzugsweise in einer Reihe, angeordnet sind.

Das erfindungsgemäße Zerspanungswerkzeug weist einen um eine Drehachse antreibbaren Grundkörper, wenigstens einen am Grundkörper radial einstellbar angeordneten Schneidenträger und eine Stelleinrichtung zur Einstellung der Lage des Schneidenträgers gegenüber dem Grundkörper auf. Der wenigstens eine Schneidenträger ist in einer Führungsaussparung im Grundkörper quer (senkrecht) zur Drehachse des Grundkörpers, vorzugsweise radial, verschiebbar angeordnet. Die Stelleinrichtung weist eine im Grundkörper axial (d.h. in Längsrichtung des Grundkörpers) verschiebbar angeordnete Stellstange auf, an welcher der wenigstens eine Schneidenträger abgestützt ist. Das erfindungsgemäße Zerspanungswerkzeug kann eine Vielzahl von Schneidenträgern aufweisen, die jeweils in einer ihnen zugeordneten Führungsaussparung im Grundkörper senkrecht zur Drehachse des Grundkörpers, vorzugsweise radial, verschiebbar angeordnet und an der einen Stellstange abgestützt sind, wobei die Schneidenträger über die Stellstange vorzugsweise synchron verschiebbar sind.

Das erfindungsgemäße Zerspanungswerkzeug weist eine in den Schneidenträger integrierte Justiereinrichtung zur Justierung/Einstellung der Lage des Schneidenträgers gegenüber der Stellstange auf. Bei mehreren Schneidenträgern kann jedem oder zumindest einigen Schneidenträgern eine eigene derartige Justiereinrichtung zugeordnet sein. Mittels der Justiereinrichtung kann die Position des Schneidenträgers relativ zu der Stellstange und somit dem Grundkörper beispielsweise bei der Herstellung des erfindungsgemäßen Zerspanungswerkzeugs voreingestellt werden. Alternativ ist eine Nacheinstellung der Position des Schneidenträgers gegenüber der Stellstange und somit dem Grundkörper im Gebrauch des erfindungsgemäßen Zerspanungswerkzeugs möglich, d.h. ohne, dass das Zerspanungswerkzeug von der Werkzeugmaschinenspindel getrennt werden müsste. Damit lassen sich Maßschwankungen vermeiden, die auf einen Wechsel oder Ausbau des Zerspanungswerkzeugs zurückgehen könnten. Solch eine Nacheinstellung kann insbesondere bei Verschleiß der Schneide des Schneidelements des Schneidenträgers erforderlich sein.

Die dem Schneidenträger zugeordnete und in diesen integrierte Justiereinrichtung weist ein an der Stellstange abgestütztes Stellelement und einen das Stellelement relativ zum Schneidenträger verstellenden Gewindetrieb auf. Der Gewindetrieb verstellt das Stellelement relativ zur Stellstange von deren Querschnitt aus gesehen. Erfindungsgemäß ist das Stellelement aus einer Gewindehülse gebildet, welche eine Steuerschräge aufweist, an welcher der Schneidenträger abgestützt ist. Die Gewindehülse ist in ihrer axialen Richtung, d.h. quer (senkrecht) zur Drehachse des Grundkörpers und quer (senkrecht) zur Verschieberichtung des Schneidenträgers, verschiebbar. Der Gewindetrieb weist eine Antriebsspindel auf, welche am Schneidenträger gelagert und mit der Gewindehülse verschraubt ist. Der Gewindetrieb weist bevorzugt ferner eine im Schneidenträger beabstandet zur Gewindehülse festgelegte Gewindebuchse (auch Lagerbuchse genannt) auf. Die Gewindebuchse ist feststehend im Schneidenträger angeordnet. Die Gewindebuchse ist insbesondere aus herstellungstechnischen Gründen anstelle einer Gewindebohrung im Schneidenträger vorgesehen.

Durch die insbesondere radiale Verschiebbarkeit des Schneidenträgers und somit der an diesem angeordneten Schneide (des an diesem angeordneten Schneidelements) lässt sich eine präzise Ein- und Verstellung des Schneidelements in Bezug auf den Grundkörper und auf ein spanend zu bearbeitendes Werkstück erreichen, insbesondere eine präzisere Einstellung als bei einer Verstellung des Schneidenträgers durch dessen Verschwenkung oder elastische Verformung wie sie aus dem Stand der Technik bekannt ist.

An dem Schneidenträger kann wenigstens ein Schneidelement vorgesehen sein, welches von diesem radial nach außen absteht. Bei dem Schneidelement handelt es sich insbesondere um eine Schneidplatte mit einer Schneide, vorzugsweise um eine Wendeschneidplatte. Das Schneidelement kann in dem am Schneidenträger für diesen vorgesehenen Sitz lageeinstellbar, z.B. durch Verschraubung, Klemmung, etc., oder lagefest, z.B. durch Kleben oder Löten, aufgenommen sein. Selbstverständlich kann ein Schneidenträger mehrere Schneiden (Schneidelemente) umfassen.

Der bzw. der jeweilige Schneidenträger ist vorzugsweise formschlüssig in der ihm zugeordneten Führungsaussparung des Grundkörpers aufgenommen. Des Weiteren ist der jeweilige Schneidenträger bevorzugt verdrehsicher in der Führungsaussparung aufgenommen und kann als Bohreinsatz ausbildet sein, der in die Führungseinsparung eingesetzt ist. Dabei erstreckt sich die Führungsaussparung senkrecht zur Drehachse des Grundkörpers des erfindungsgemäßen Zerspanungswerkzeugs und in Verschieberichtung des Schneidenträgers. Vorzugsweise ist die Führungsaussparung als Durchgangsaussparung, insbesondere als Durchgangsbohrung, ausgebildet, die durch den Grundkörper hindurchtritt. Eine Ausgestaltung der Führungsaussparung als Grundaussparung mit einem Grund/Boden im Sinne eines Sacklochs ist ebenfalls möglich.

Der bzw. jeder Schneidenträger weist bevorzugt einen axialen Durchbruch, d.h. einen sich entlang der Drehachse des erfindungsgemäßen Zerspanungswerkzeugs erstreckenden Durchbruch auf, in welchem die sich ebenfalls in Längsrichtung erstreckende Stellstange aufgenommen ist. Ein jeder Schneidenträger ist an der im Grundkörper des Zerspanungswerkzeugs axial verschiebbar angeordneten Stellstange in der Weise im Wesentlichen radial abgestützt, dass der Schneidenträger zur Verstellung des Schneidenträgers und somit des am Schneidenträger vorgesehenen Schneidelements relativ zum Grundkörper radial ein- und aussteuerbar, d.h. radial nach innen und außen verschiebbar, ist. Insbesondere kann vorgesehen sein, dass der Schneidenträger mit seinem Schneidelement mittels der Stellstange in radialer Richtung zwischen einer eingesteuerten/eingefahrenen Position, in der das am Schneidenträger gehaltene Schneidelement auf einem minimalen Durchmesser bezüglich einer Dreh- oder Längsmittelachse des Grundkörpers liegt (in radialer Richtung beispielsweise in einem definierten (geringen) Abstand außerhalb, auf Höhe oder innerhalb des Außenumfangs des Grundkörpers), und einer ausgesteuerten Position, in der das am Schneidenträger gehaltene Schneidelement auf einem maximalen Radius, d.h. auf einem vorgegebenen Nenndurchmessermaß bezüglich der Dreh- oder Längsmittelachse des Grundkörpers liegt (d.h. in einem (großen) radialen Abstand über dem Außenumfang des Grundkörpers), radial verstellbar ist.

Hierzu weist die Stellstange vorzugsweise Abschnitte unterschiedlichen Durchmessers auf. So können ein oder mehrere einen maximalen Durchmesser der Stellstange definierende Abschnitte beispielsweise durch einen oder mehrere Zylinderabschnitte gegeben sein. Stützt sich der Schneidenträger an solch einem Abschnitt ab, so erreicht er seinen maximal durch die Stellstange erzielbaren Außenradius. Im Anschluss an einen Zylinderabschnitt weist die Stellstange bevorzugt eine Durchmesserverjüngung auf, vorzugsweise in Form eines sich an den Zylinderabschnitt in Längsrichtung anschließenden Kegelabschnitts. Durch axiale Verschiebung der Stellstange, sodass sich der Schneidenträger an einem Kegelabschnitt abstützt, kann nun erreicht werden, dass der sich an der Stellstange abstützende Schneidenträger radial eingesteuert, d.h. radial nach innen verschoben wird, beispielsweise um das Zerspanungswerkzeug in eine zu bearbeitende Bohrung einzufahren, ohne dass das vom Schneidenträger getragene Schneideelement mit der zu bearbeitenden Bohrungswand in Kontakt kommt. Anschließend kann der Schneidenträger wieder radial ausgesteuert (d.h. radial nach außen verschoben) werden, indem die Stellstange in Längsrichtung verschoben wird, so dass der Schneidenträger auf einen oben erwähnten Zylinderabschnitt aufläuft, wodurch das am Schneidenträger getragene Schneidelement wieder auf den zuvor justierten Nenndurchmesser gebracht und die Bohrung bearbeitet werden kann. Die Stellstange ist vorzugsweise mit einem in einem im Grundkörper vorgesehenen Druckraum angeordneten Kolbenelement verbunden, mittels welchem sie in Richtung der Drehachse des Grundkörpers bewegt werden kann und welches gegenüber dem Grundkörper elastisch, vorzugsweise federnd, abgestützt sein kann. Ein entsprechender Druckraum und eine entsprechendes Kolbenelement sind in der deutschen Patentanmeldung Nr. 10 2016 217 243.3 beschrieben.

Der Schneidenträger ist gegenüber dem Grundkörper bevorzugterweise elastisch, vorzugsweise federnd, abgestützt, sodass er senkrecht zur Drehachse des Grundkörpers und somit senkrecht zur Stellstange verschiebbar ist. Hierzu ist der Schneidenträger gemäß bevorzugter Ausführungsform mit einer Traverse verbunden, die über eine oder mehrere Druckfedern gegen den Grundkörper abgestützt ist, wobei sich die Druckfedern in der Verschieberichtung des Schneidenträgers erstrecken. Die Traverse erstreckt sich vorzugsweise senkrecht zur Verschieberichtung des Schneidenträgers und senkrecht zur Drehachse des Grundkörpers.

Die Antriebsspindel ist vorzugsweise als Differentialgewindespindel ausgebildet, welche mit einem ersten Gewindeabschnitt mit der Gewindehülse und mit einem zweiten Gewindeabschnitt mit der Gewindebuchse verschraubt ist. Gewindehülse und Gewindebuchse sind auf die Differentialgewindespindel aufgeschraubt. Der erste Gewindeabschnitt und der zweite Gewindeabschnitt können verschiedene Gewindesteigungen (Ganghöhen), aber gleiche Gewinderichtungen (Gangrichtungen) aufweisen. Bei einer Betätigung der Differentialgewindespindel bewegt sich die Gewindehülse entlang der Spindelachse, d.h. senkrecht zur Drehachse des Grundkörpers und senkrecht zur Verschieberichtung des Schneidenträgers um eine Strecke, die dem Steigungsunterschied der beiden Gewindeabschnitte der Differentialgewindespindel entspricht. Zwischen der Gewindehülse und der Gewindebuchse kann eine Druckfeder vorgesehen sein, um einerseits ein Gewindespiel zwischen dem Außengewinde des ersten Gewindeabschnitts der Differentialgewindespindel und dem Innengewinde der Gewindehülse und andererseits ein Gewindespiel zwischen dem Außengewinde des zweiten Gewindeabschnitts der Differentialgewindespindel und dem Innengewinde der Gewindebuchse zu reduzieren.

Der bzw. jeder Justiereinrichtung des erfindungsgemäßen Zerspanungswerkzeugs ist vorzugsweise ein am Schneidenträger drehbeweglich gehaltenes Betätigungselement zugeordnet, das mit der Antriebsspindel bzw. der Differentialgewindespindel drehfest und insbesondere axialbeweglich in Eingriff steht, d.h. drehfest und insbesondere in Verschieberichtung der Gewindehülse verschiebbar verbunden ist, und der Drehbetätigung der Antriebsspindel bzw. der Differentialgewindespindel dient. Das Betätigungselement umfasst vorzugsweise einen sogenannten Skalenring, welcher beispielsweise eine Skalierung von 10 Marken/Teilstrichen aufweist. Das Betätigungselement bzw. dessen Skalenring ist vorzugweise mittels eines Federrings am Grundkörper des erfindungsgemäßen Zerspanungswerkzeugs befestigt und stellt zugleich die Längskupplung der Antriebsspindel bzw. der Differentialgewindespindel dar.

Dadurch, dass der Schneidenträger über die Steuerschräge des Stellelements der Justiereinrichtung an der Stellstange abgestützt ist, kann der Schneidenträger - zusätzlich zu einer axialen Bewegung der Stellstange - vorteilhafterweise auch über die Justiereinrichtung radial verschoben werden, indem das Stellelement mittels des Gewindetriebs senkrecht zur Verschieberichtung des Schneidenträgers und senkrecht zur Drehachse des Grundkörpers bewegt wird.

Das erfindungsgemäße Zerspanungswerkzeug bietet daher wenigstens zwei voneinander unabhängige Möglichkeiten für eine radiale Schneidenverstellung. Gerade bei einer Lagergasse müssen sämtliche Lagerstege im Durchmesser sehr präzise und mit einer hohen Fluchtgenauigkeit gefertigt werden. Jedes erfindungsgemäß gestaltete Zerspanungswerkzeug gewährleistet die hierzu erforderliche individuelle Feinjustierung der Schneiden im µm-Bereich. Durch die radiale Verschiebbarkeit des bzw. der Schneidenträger und somit der an diesem angeordneten Schneide bzw. des an diesem angeordneten Schneidelements lässt sich eine präzise Ein- und Verstellung des Schneidelements in Bezug auf den Grundkörper und ein spanend zu bearbeitendes Werkstück erreichen, insbesondere eine präzisere Einstellung als bei einer Verstellung des Schneidenträgers durch Verschwenkung oder elastische Verformung wie sie aus dem Stand der Technik bekannt ist.

Die sich durch eine axiale Verschiebung der Stellstange ergebende Steuermöglichkeit kann insbesondere dazu genutzt werden, bei mehreren sich an der Stellstange abstützenden Schneidenträgern diese synchron relativ zum Grundkörper des Zerspanungswerkzeugs radial ein- oder auszusteuern bzw. zu verschieben, insbesondere um das Zerspanungswerkzeug im eingesteuerten Zustand der Schneidenträger geradlinig, beispielsweise zentrisch, in eine zu bearbeitende Lagergasse einzufahren und in dieser zu verfahren, ohne dass die Schneidelemente mit der zu bearbeitenden Lagerbohrung in Berührung kommen, und um anschließend durch axiale Verschiebung der Stellstange die Schneidenträger synchron radial auszusteuern bzw. nach radial außen zu verschieben, um die Lagerstege der Lagergasse auf den gewünschten Nenndurchmesser zu bearbeiten.

Dadurch, dass sich die Justiereinrichtung des erfindungsgemäßen Zerspanungswerkzeugs sowohl in Querrichtung zur Drehachse des Grundkörpers als auch in Querrichtung zur Verschieberichtung des Schneidenträgers erstreckt, ist eine bauraumsparende Anordnung der Schneidenträger in axialer Richtung, d.h. in Längsrichtung, des Zerspanungswerkzeugs möglich, sodass eine hohe Anzahl von Schneidenträgern und somit eine hohe Anzahl von Schneiden/Schneidelementen auf engem Raum (in axialer Richtung bzw. Längsrichtung gesehen) am Zerspanungswerkzeug vorgesehen sein können, wobei eine strukturelle Schwächung der Schneidenträger vorteilhafterweise vermieden werden kann. Da typischerweise unterschiedliche Schneiden/Schneidelemente für unterschiedliche Bearbeitungsschritte (z.B. Schruppen, Semifinish, Finish, Versehen mit einer Fase etc.) eingesetzt werden, können bei dem erfindungsgemäßen Zerspanungswerkzeug Schneiden für eine hohe Anzahl von Bearbeitungsschritten auf einem (Werkzeug-)Abschnitt relativer kurzer axialer Ausdehnung untergebracht werden, sodass das erfindungsgemäße Zerspanungswerkzeug zum Beispiel bei der Bearbeitung von Lagerstellen einer Lagergasse beim Wechsel von einem Bearbeitungsschritt zum nächsten und somit beim Wechsel von einer Schneide zu einer anderen in Längsrichtung nur über kurze Strecken hin- und her bewegt werden muss und vorteilhafterweise nur ein einziges erfindungsgemäßes Zerspanungswerkzeug für die spanabtragende Bearbeitung einer Lagergasse erforderlich ist. D.h. es muss vorteilhafterweise nicht zwischen unterschiedlichen Zerspanungswerkzeugen mit für unterschiedliche Bearbeitungsschritte ausgebildeten Schneidenträgern/Schneidelementen gewechselt werden.

Bei dem erfindungsgemäßen Zerspanungswerkzeug sind vorzugsweise verschiedenen spanabtragenden Bearbeitungsschritten zugeordnete Schneidenträger in einem Werkzeugabschnitt zusammengefasst, wobei das Zerspanungswerkzeug vorzugsweise mehrere in Längsrichtung aufeinander ausgerichtete und benachbart angeordnete Werkzeugabschnitte umfasst. So umfasst ein Werkzeugabschnitt des erfindungsgemäßen Zerspanungswerkzeug vorzugsweise einen ersten Schneidenträger, der mit einer für eine schruppende Bearbeitung eines Lagerstegs einer Lagergasse konfigurierten Schneide ausgestattet ist, einen zweiten Schneidenträger, der mit einer für ein Anbringen einer Fase an einem Lagersteg konfigurierten Schneide ausgestattet ist, einen dritten Schneidenträger, der mit einer für eine Semifinish-Bearbeitung eines Lagerstegs konfigurierten Schneide ausgestattet ist und einen vierten Schneidenträger, der mit einer für einen Finish-Bearbeitung eines Lagerstegs konfigurierten Schneide ausgestattet ist. Dabei können Schneidenträger eines Werkzeugabschnitts für die Bearbeitung zweier in Längsrichtung der Lagergasse nebeneinander angeordneter Lagerstege eingesetzt werden. D.h. ein Lagersteg kann von zwei benachbarten Werkzeugabschnitten bearbeitet werden.

Dem vierten, für die Finish-Bearbeitung vorgesehenen Schneidenträger und bevorzugt auch dem dritten, für die Semifinish-Bearbeitung vorgesehenen Schneidenträger ist vorzugweise jeweils eine Justiereinrichtung, wie sie oben und/oder im Zusammenhang mit der folgenden Figurenbeschreibung beschrieben ist zugeordnet, die jeweils in diese integriert ist, da bei diesen Schneidenträgern, die abschließende Bearbeitungsschritte durchführen, eine besonders präzise Einstellung für eine besondere hohe Bearbeitungsgenauigkeit erforderlich ist. Bei den für vergleichsweise gröbere Arbeitsschritte wie Schruppen und Anbringen einer Fase eingesetzten ersten und zweiten Schneidenträgern kann dagegen aus Gründen der Platzersparnis auf eine solche Justiereinrichtung verzichtet werden.

Um eine effiziente Bearbeitung der einen oder mehreren Lagerstege zu gewährleisten, folgen in Längsrichtung des Zerspanungswerkzeugs aus gesehen vorzugsweise der erste Schneidenträger, der zweite Schneidenträger, der vierte Schneidenträger und der dritte Schneidenträger aufeinander.

Mit einem derartigen Zerspanungswerkzeug gemäß der Erfindung lässt sich wie folgt eine Lagergasse mit mehreren in Längsrichtung beabstandet angeordneten Lagerstegen, die vorzugsweise axial in Reihe angeordnet sind, in folgenden Schritten auf einen vorgegebenen Nenndurchmesser fertigbearbeiten:
- Zentriertes und geradliniges Einfahren des Zerspanungswerkzeugs in die Lagergasse, wobei die Schneidenträger in eingefahrener Stellung sind, bis die ersten, für die schruppende Bearbeitung vorgesehenen Schneidenträger der Werkzeugabschnitte für die Bearbeitung der Lagerstege positioniert sind;
- Verstellen der Schneidenträger in ihre ausgefahrene Stellung mittels der Stelleinrichtung, insbesondere deren Stellstange,
- Schruppende Bearbeitung der Lagerstege mittels der ersten Schneidenträger durch Drehbewegung des Grundkörpers, wobei das Zerspanungswerkzeug geradlinig weiterverfahren wird,
- geradliniges Weiterverfahren des Zerspanungswerkzeugs bis die zweiten, für das Anbringen einer Fase vorgesehenen Schneidenträger der Werkzeugabschnitte für die Bearbeitung der Lagerstege positioniert sind,
- Anbringen einer einseitigen Fase an die Lagerstege mittels der zweiten Schneidenträger durch Drehbewegung des Grundkörpers,
- Verstellen der Schneidenträger in ihre eingefahrene Stellung mittels der Stelleinrichtung,
- -geradliniges Verfahren des Zerspanungswerkzeugs, insbesondere in die zu der bisherigen Verfahrensrichtung entgegengesetzte Richtung, bis die dritten, für die Semifinish-Bearbeitung vorgesehenen Schneidenträger der zu den bisher für die Bearbeitung einer Lagerstelle eingesetzten Werkzeugabschnitten benachbarten Werkzeugabschnitte für die Bearbeitung der Lagerstege positioniert sind,
- Verstellen der Schneidenträger in ihre ausgefahrene Stellung mittels der Stelleinrichtung, insbesondere deren Stellstange,
- Semifinish-Bearbeitung der Lagerstege mittels der dritten Schneidenträger der benachbarten Werkzeugabschnitte durch Drehbewegung des Grundkörpers, wobei das Zerspanungswerkzeug geradlinig weiterverfahren wird,
- geradliniges Weiterverfahren des Zerspanungswerkzeugs bis die vierten, für die Finish-Bearbeitung vorgesehenen Schneidenträger der benachbarten Werkzeugabschnitte für die Bearbeitung der Lagerstege positioniert sind,
- Finish-Bearbeitung der Lagerstege mittels der vierten Schneidenträger der benachbarten Werkzeugabschnitte durch Drehbewegung des Grundkörpers, wobei das Zerspanungswerkzeug geradlinig weiterverfahren wird,
- geradliniges Weiterverfahren des Zerspanungswerkzeugs bis die zweiten Schneidenträger der benachbarten Werkzeugabschnitte für die Bearbeitung der Lagerstege positioniert sind,
- Anbringen einer einseitigen Fase an die Lagerstege auf der Seite, auf welcher noch keine Fase angebracht worden ist, mittels der zweiten Schneidenträger der benachbarten Werkzeugabschnitte durch Drehbewegung des Grundkörpers,
- Verstellen der Schneidenträger in ihre eingefahrene Stellung mittels der Stelleinrichtung, insbesondere deren Stellstange, und
- geradliniges Ausfahren des Zerspanungswerkzeugs aus der Lagergasse.

Die radiale Verstellung der Schneidenträger in deren eingefahrene und ausgefahrene Stellung erfolgt dabei vorzugsweise durch axiale Verschiebung der im Grundkörper des Zerspanungswerkzeugs angeordneten Stellstange der Stelleinrichtung, die zu diesem Zweck fluidisch, hydraulisch, pneumatisch, elektromotorisch oder elektromagnetisch angetrieben werden kann, wobei es sich bei der radialen Verstellung insbesondere um eine radiale Verschiebung handelt.

Im Anschluss an die obige spanabhebende Bearbeitung der Lagerstege können die Bohrungen der bearbeiteten Lagerstege auf Nenndurchmessermaßhaltigkeit geprüft werden. Für den Fall, dass bei einem oder mehreren der Lagerstege festgestellt wird, dass der Bohrungsdurchmesser von dem vorgegebenen Nenndurchmesser abweicht, können insbesondere die für die Finish-Bearbeitung zuständigen vierten Schneidenträger und vorzugsweise auch die für die Semifinish-Bearbeitung zuständigen dritten Schneidenträger, welche den bzw. die Lagerstege mit nicht erreichtem Nenndurchmesser bearbeitet hatten, mittels der diesen zugeordneten Justiereinrichtungen so nachjustiert werden, dass bei einer anschließenden erneuten Bearbeitung die Nenndurchmessermaßhaltigkeit gegeben ist.

Vorteilhafterweise können mit dem erfindungsgemäßen Zerspanungswerkzeug sämtliche erforderlichen spanabtragenden Bearbeitungsschritte einer Lagergasse durchgeführt werden, ohne dass ein Wechsel des Zerspanungswerkzeugs zu einem anderen Zerspanungswerkzeug mit anderen Schneiden bzw. Schneidenträgers erforderlich ist. Bei dem erfindungsgemäßen Zerspanungswerkzeug sind sämtliche benötigten Schneidenträger bzw. Schneiden in einem Zerspanungswerkzeug integriert.

Im Folgenden werden mit Hilfe der beigefügten Zeichnungen eine bevorzugte Ausführungsform eines erfindungsgemäßen Zerspanungswerkzeugs und ein erfindungsgemäßes Verfahren beschrieben. Es zeigt:
Fig. 1 eine perspektivische Ansicht eines erfindungsgemäßen Zerspanungswerkzeugs;
Fig. 2 einen Längsschnitt eines Längsabschnitts des in Fig. 1 gezeigten Zerspanungswerkzeugs;
Fig. 3 einen Querschnitt des in den Fign. 1 und 2 gezeigten Zerspanungswerkzeugs; und
Fig. 4 eine Seitenansicht des in den Fign. 1-3 gezeigten Zerspanungswerkzeugs.

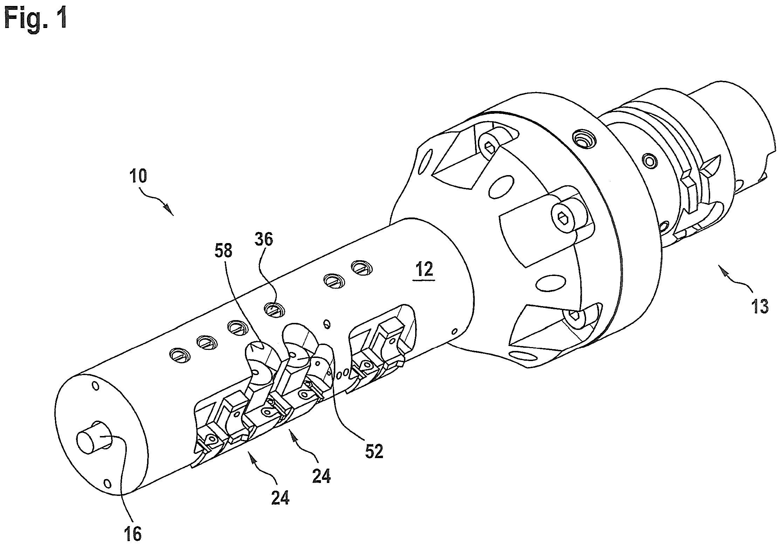

Fig. 1 zeigt ein mehrschneidiges Zerspanungswerkzeugs 10 gemäß der Erfindung, das für eine Lagergassenbearbeitung eingesetzt werden kann. Selbstverständlich kann das Zerspanungswerkzeug 10 auch nur eine Schneide und somit nur einen Schneidenträger aufweisen. Das mehrschneidige Zerspanungswerkzeug 10 weist einen um seine nicht näher bezeichnete Dreh- bzw. Längsmittelachse drehantreibbaren Grundkörper 12 (auch Werkzeugschaft genannt), der als eine Bohrstange ausgebildet sein kann, und vorzugsweise eine am hinteren (in Fig. 1 rechten) Ende an den Grundkörper 12 axial anschließende werkzeugmaschinenspindelseitige Schnittstelle 13 auf, die in der gezeigten Ausführungsform einen sogenannten HSK(Hohlschaftkegel)-Schaft hat. Alternativ dazu kann beispielsweise ein sogenannter SK(Steilkegel)-Schaft oder dergleichen vorgesehen sein. An dem von der Schnittstelle 13 fernen, vorderen (in Fig. 1 linken) Ende kann der Grundkörper 12 einen zylindrischen Lagerabschnitt aufweisen, über den das Zerspanungswerkzeug 10 während der spanabhebenden Bearbeitung eine Abstützung erfährt.

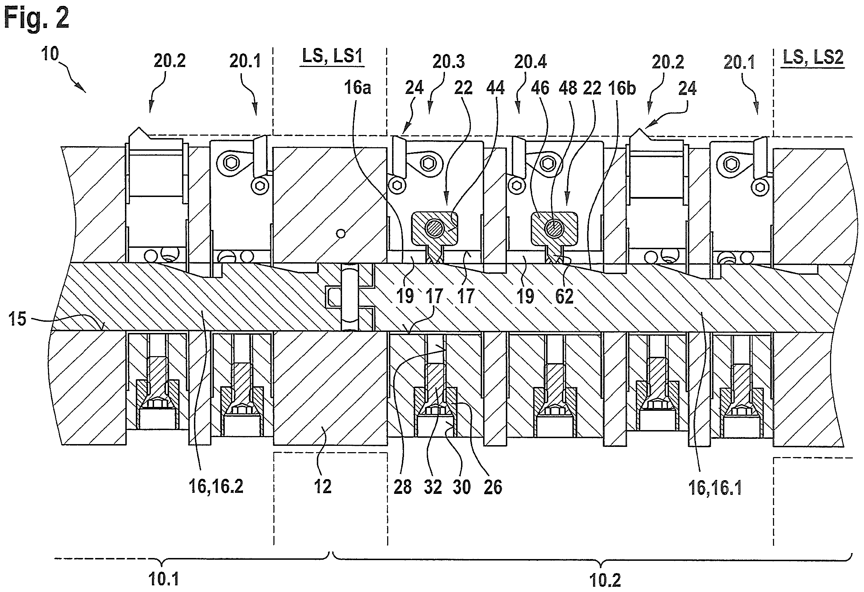

In den Fign. 1 bis 3 erkennt man des Weiteren, dass das erfindungsgemäße Zerspanungswerkzeug 10 eine in einer mittig angeordneten axialen Durchgangsbohrung bzw. Durchgangsaussparung 15 im Grundkörper 12 längsverschiebbar angeordnete Stellstange 16 aufweist, welche eine Stelleinrichtung zur Einstellung der Lage eines Schneidenträgers 20, 20.1-20.4 gegenüber dem Grundkörper 12 bildet. Die Stellstange 16 ist in der gezeigten Ausführungsform aus mehreren, im Besonderen einer der Anzahl der unten beschriebenen Werkzeugabschnitte 10.1, 10.2 entsprechenden Anzahl von in axialer Richtung zug-/druckfest miteinander verbundenen Teilstücken zusammengesetzt, von welchen in Fig. 2 beispielhaft die benachbarten Teilstücke 16.1 und (teilweise) 16.2 dargestellt sind.

Die Stellstange 16 ist vorzugsweise an ihrem schnittstellenseitigen Ende zug-/druckfest mit einem nicht dargestellten Kolben (auch Kolbenelement genannt) verbunden, der in einer nicht dargestellten zylindrischen Öffnung im Grundkörper 12 abgedichtet aufgenommen und bei Druckbeaufschlagung gegen die Federkraft einer zwischen dem Kolben und dem Boden der zylindrischen Öffnung angeordneten, nicht dargestellten Druckfeder axial relativ zur Schnittstelle 13 verschiebbar ist. Ein im Grundkörper 12 ausgebildetes, nicht dargestelltes Kanalsystem, das mit dem Druckraum der zylindrischen Öffnung wirkverbunden ist, kann ferner eingesetzt werden, um die Schneiden des Zerspanungswerkzeugs 10 mit Kühlschmiermittel zu versorgen. Wird der Kühlschmiermittel-Einspeisedruck über eine vorgegebene Höhe hinaus erhöht, wird der Kolben derart verdrängt, dass die Stellstange 16 in Fig. 1 nach links verschoben wird. Wird der Kühlschmiermittel-Einspeisedruck anschließend wieder bis unter die vorgegebene Höhe abgesenkt, werden der Kolben und die Stellstange 16 durch die Federkraft der zwischen dem Kolben und dem Grundkörper 12 angeordneten Druckfeder wieder in Fig. 1 nach rechts zurück gedrängt bzw. verschoben. Das Prinzip zum axialen Verschieben der Stellstange 16 ist grundsätzlich aus der deutschen Patentanmeldung Nr. 10 2016 217 243.3 bekannt, sodass auf eine detailliertere Beschreibung verzichtet wird.

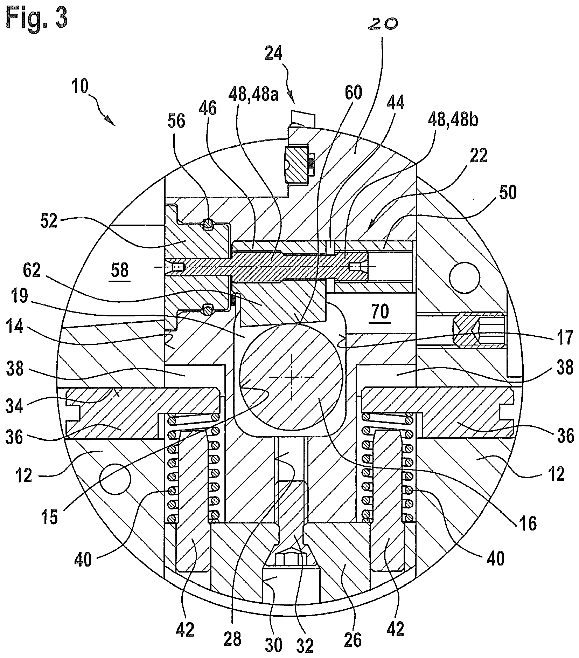

Man erkennt in Fig. 2 des Weiteren, dass jedes der Teilstücke 16.1 und 16.2 der Stellstange 16 in Längsrichtung abwechselnd Zylinderabschnitte 16a und Kegelabschnitte 16b aufweist. Die axial aufeinanderfolgenden Zylinder- und Kegelabschnitte 16a, 16b jedes Teilstücks 16.1 und 16.2 bilden dem jeweiligen Teilstück 16.1 und 16.2 zugeordnete, jeweils aus einem Zylinderflächenabschnitt und einem Kegelflächenabschnitt zusammengesetzte Steuerflächen der Stellstange 16, an denen die nachfolgend beschriebene Schneidenträger 20, 20.1-20.4 radial abgestützt sind. Die Zylinderabschnitte 16a können axial unterschiedlich lang ausgestaltet sein. Entsprechendes gilt für die Kegelabschnitte 16b. Insbesondere sind Zylinderabschnitte 16a und Kegelabschnitte 16b, die Schneidenträgern 20, 20.3, 20.4 mit später beschriebener Justiereinrichtung 22 (vgl. Fign. 2 und 3) zugeordnet sind, länger als Zylinderabschnitte 16a und Kegelabschnitte 16b, die Schneidenträgern 20, 20.1, 20.2 ohne zusätzliche Justiereinrichtung 22 zugeordnet sind. Um Platz in Längsrichtung des Zerspanungswerkzeugs 10 zu sparen, ist jeweils eine Justiereinrichtung 22 vorzugsweise nur denjenigen Schneidenträgern 20, 20.3, 20.4 zugeordnet, deren Schneiden besonders genau eingestellt werden müssen. Dies sind im Besonderen die Schneiden der Schneidenträger 20.3, 20.4, die für die abschließenden Bearbeitungsschritte, insbesondere die Bearbeitungsschritte Semifinish und Finish, eingesetzt werden, wobei Semifinish der Vorbearbeitung der Lagerstege LS und Finish der Endbearbeitung der Lagerstege LS dient.

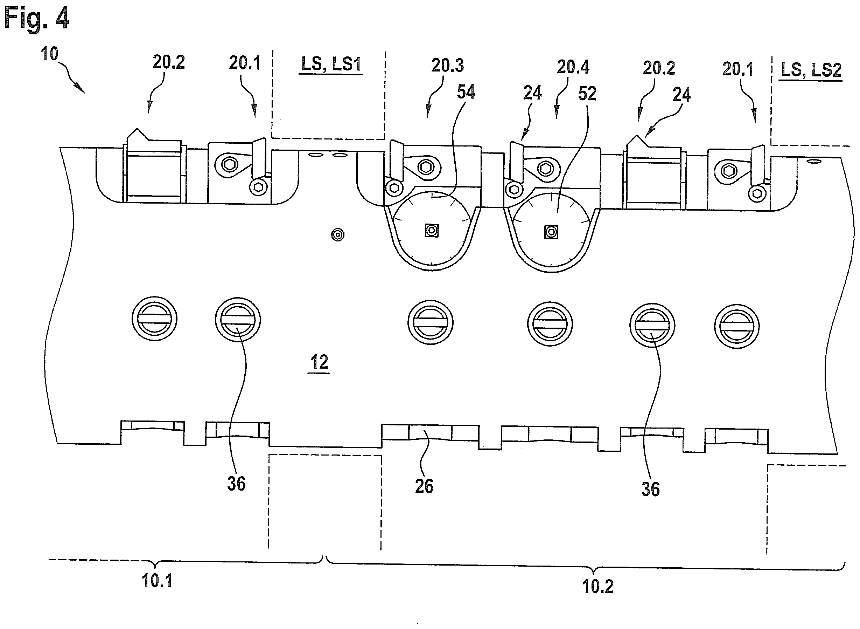

Das erfindungsgemäße Zerspanungswerkzeug 10 umfasst bevorzugterweise mehrere Werkzeugabschnitte 10.1, 10.2, die vorzugsweise jeweils sämtliche für die spanabtragende Bearbeitung der Lagerstege LS erforderliche Schneidenträger 20.1-20.4 mit den jeweils erforderlichen Schneiden umfassen (siehe Fign. 2 und 4). So umfassen die Werkzeugabschnitte 10.1, 10.2 jeweils einen Schneidenträger 10.1 für eine schruppende Bearbeitung, einen Schneidenträger 20.2 für das Anbringen einer Fase, einen Schneidenträger 20.3 für eine Semifinish-Bearbeitung und einen Schneidenträger 20.4 für eine Finish-Bearbeitung. Die Schneidenträger 20.1-20.4 sind in Längsrichtung des jeweiligen Werkzeugabschnitts 10.1, 10.2 vorzugsweise in einer Reihenfolge angeordnet, die eine schnelle und effiziente Bearbeitung der Lagerstege LS, LS1, LS2 ermöglicht, wobei ein Lagersteg LS, LS1, LS2 vorzugsweise sowohl von dem in Längsrichtung links von ihm angeordneten Werkzeugabschnitt als auch von dem rechts von ihm angeordneten Werkzeugabschnitt bearbeitet wird. So wird beispielsweise der Lagersteg LS1 sowohl von dem (teilweise dargestellten) Werkzeugabschnitt 10.1 als auch von dem Werkzeugabschnitt 10.2 bearbeitet. Entsprechend wird der Lagersteg LS2 sowohl von dem Werkzeugabschnitt 10.2 als auch von einem nicht dargestellten, sich rechts an den Werkzeugabschnitt 10.2 anschließenden Werkzeugabschnitt 10.3 bearbeitet. Die Ausdrücke "links" und "rechts" beziehen sich dabei auf die Darstellungen in den Fign. 2 und 4. Vorzugsweise weisen sämtliche Schneidenträger 20.1-20.4 in Querrichtung in die gleiche Richtung, sodass ihre Schneiden in Längsrichtung in Reihe angeordnet sind.

Zur Bearbeitung einer Lagergasse wird das Zerspanungswerkzeug 10 vorerst außerhalb der Lagergasse so positioniert, dass die Drehachse des Grundkörpers 12 mit der Mittelachse der Lagergasse fluchtet. Dabei dreht sich das Zerspanungswerkzeug 10 vorzugsweise noch nicht. Die Schneidenträger 20.1-20.4 sind in eingefahrener Stellung. Hierfür ist die Stellstange 16 in Längsrichtung derart verschoben, dass sämtliche Schneidenträger 20.1-20.4 sich an Kegelabschnitten 16b der Stellstange 16 abstützen, sodass sich sämtliche Schneidenträger 20.1-20.4 in eingefahrener Stellung befinden, damit sie die Lagerstege LS, LS1, LS2 der Lagergasse beim Einfahren in die Lagergasse nicht berühren können. Die Verschiebung der Stellstange 16 in Längsrichtung/axialer Richtung erfolgt jeweils über die Erhöhung bzw. Absenkung des Drucks im oben beschriebenen, nicht dargestellten Druckraum, wodurch der oben beschriebene Kolben die Stellstange 16 nach links bzw. nach rechts verdrängt bzw. verschiebt. Das Durchmessermaß, auf dem sich die Schneidplatten 20.1-20.4 in dem eingefahrenen Zustand befinden, kann größer, gleich oder kleiner sein als der Außendurchmesser des Grundkörpers 12, solange ein Kontakt mit den zu bearbeitenden Lagerstege LS, LS1, LS2 vermieden werden kann. Die Verstellung der Schneidenträger 20.1-20.4 durch die Stellstange 16 zwischen eingefahrener und ausgefahrener Stellung und vice versa erfolgt jeweils synchron für sämtliche Schneidenträger 20.1-20.4.

Im eingefahrenen Zustand der Schneidenträger 20.1-20.4 wird das Zerspanungswerkzeug 10 in Vorschubrichtung geradlinig entlang seiner Dreh- oder Längsmittelachse in die Lagergasse eingefahren und zwar bis die für den ersten spanabtragenden Bearbeitungsschritt (Schruppen) vorgesehenen Schneidenträger 20.1 für die Bearbeitung der ihnen zugeordneten Lagerstege LS1, LS2 positioniert sind, insbesondere - in Vorschubrichtung gesehen - hinter dem bzw. links von dem jeweils zu bearbeitenden Lagersteg LS1, LS2 (vgl. Fign. 2 und 4). Die Abstände zwischen den Schneidenträgern 20.1-20.4 sind dabei in Längsrichtung so gewählt, dass der erste Schneidenträger 20.1 sich links vom Lagersteg LS2 befindet (für den Werkzeugabschnitt 10.2). Der zweite, vierte und dritte Schneidenträger 20.2, 20.4, 20.3 des Werkzeugabschnitts 10.2 sind in dieser Reihenfolge in Längsrichtung links von dem ersten Schneidenträger 20.1 und rechts von dem Lagersteg LS1, der in Längsrichtung links auf den Lagersteg LS1 folgt, angeordnet. Für die Schneidenträger 20.1-20.4 des Werkzeugabschnitts 10.1 gilt Entsprechendes.

Als nächstes werden sämtliche Schneidenträger 20.1-20.4 in ihre ausgefahrene Stellung verschoben, indem die Steuerstange 16 in Längsrichtung derart bewegt wird, dass sich die Schneidenträger 20.1-20.4 auf den Zylinderabschnitten 16a abstützen.

Dann werden die Lagerstege LS1, LS2 schruppend von den Schneidenträger 20.1 bzw. deren Schneiden bearbeitet, indem das Zerspanungswerkzeug 10 bzw. dessen Grundkörper 12 drehangetrieben wird, während das Zerspanungswerkzeug 10 durch eine axialen Rückhub (in Fign. 2 und 4 nach rechts) soweit in Längsrichtung bewegt wird, bis die Lagerstege LS1, LS2 vollständig von den Schneidenträgern 20.1 bearbeitet worden sind.

Nach der Beendigung des Schrupp-Bearbeitungsschrittes wird das Zerspanungswerkzeugs 10 soweit in Längsrichtung rückwärts (in Fign. 2 und 4 nach rechts) verfahren, bis die zweiten Schneidenträger 20.2, die für das Anbringen einer Fase verantwortlich sind, für die Bearbeitung der Lagerstege LS1, LS2 positioniert sind, d.h. in den Fign. 2 und 4 sich links von den Lagerstegen LS1 und LS2 bzw. an deren linker Ecke befinden. Durch den Drehantrieb des Zerspanungswerkzeugs 10 wird einseitig (in Fign. 2 und 4 links) eine Fase an den Lagerstegen LS1, LS2 angebracht. Der Schneidenträger 20.2 des Werkzeugabschnitts 10.1 bringt die einseitige Fase an dem Lagersteg LS1 an, während der Schneidenträger 20.2 des rechts benachbarten Werkzeugabschnitts 10.2 die einseitige Fase an dem benachbarten Lagersteg LS2 anbringt. Optional können die Schneidenträger 20.1-20.4 zwischen dem ersten Bearbeitungsschritt (Schruppen) und dem zweiten Bearbeitungsschritt (einseitiges Anbringen einer Fase) durch axiales Verstellen der Stellstange 16 ein- und wieder ausgefahren werden, falls wünschenswert.

Für den nächsten Bearbeitungsschritt (Semifinish) werden die Schneidenträger 20.1-20.4 durch axiales Verschieben der Stellstange 16, bis sich die Schneidenträger 20.1-20.4 wieder an Kegelabschnitten 16b abstützen, wieder in ihre eingefahrene Stellung verschoben, um unter den Lagerstegen LS1, LS2 hindurchverschoben werden zu können, und das Zerspanungswerkzeug 10 wird in Längsrichtung geradlinig in Vorschubrichtung (in Fign. 2 und 4 nach links) verfahren, bis die dritten Schneidenträger 20.3 der zu denjenigen Werkzeugabschnitten 10.1, 10.2, die Lagestellen LS1, LS2 bisher bearbeitet hatten, entgegen der Verschieberichtung des Zerspanungswerkzeugs 10 gesehen benachbarten Werkzeugabschnitte 10.2, 10.3 (Werkzeugabschnitt 10.3 ist nicht dargestellt) für die Bearbeitung der Lage LS1, LS2 positioniert sind. Die benachbarten Werkzeugabschnitte 10.2, 10.3 befinden sich in den Fign. 2 und 4 jeweils rechts von den zu bearbeitenden Lagersteg LS1, LS2. D.h. zum Beispiel der Lagersteg LS1, der bisher (Schruppen und Anbringen einer ersten, in Fign. 2 und 4 linken Fase) von dem Werkzeugabschnitt 10.1 bzw. dessen Schneidenträgern 20.1 und 20.2 bearbeitet wurde, wird nun von dem Schneidenträger 20.3 des Werkzeugabschnitts 10.2 bearbeitet. Auch die noch folgenden Arbeitsschritte des Finish und des Anbringens einer der ersten (linken) Fase gegenüberliegenden zweiten Fase an den Lagerstegen LS1, LS2 erfolgen durch die Schneidenträger 20.4 (Finish) bzw. 20.2 (Anbringen der zweiten Fase) des benachbarten Werkzeugabschnitts 10.2.

Für das Semifinish werden die Schneidenträger 20.1-20.4 durch axiale Verstellung der Stellstange 16, so dass sich die Schneidenträger 20.1-20.4 an Zylinderabschnitten 16a abstützen, ausgefahren, und die Semifinish-Bearbeitung erfolgt durch Vorschub des Zerspanungswerkzeugs 10 in dessen Längsrichtung bei gleichzeitiger Drehbewegung des Zerspanungswerkzeugs 10.

Anschließend wird die Finish-Bearbeitung der Lagerstege LS1, LS2 durchgeführt, indem das Zerspanungswerkzeug 10 weiter geradlinig in Längsrichtung verfahren wird (in Fign. 2 und 4 nach links), bis die für das Finish zuständigen vierten Schneidenträger 10.4 der benachbarten Werkzeugabschnitte 10.2, 10.3 (letzterer nicht dargestellt) links von den jeweiligen Lagerstegen LS1, LS2 positioniert sind, und weiter verfahren wird, bis die Schneidenträger 10.4 der benachbarten Werkzeugabschnitte 10.2, 10.3 die Lagerstege LS1, LS2 vollständig bearbeitet haben. Optional können die Schneidenträger 20.1-20.4 zwischen den Bearbeitungsschritten Semifinish und Finish durch axiales Verschieben der Stellstange 16 ein- und wieder ausgefahren werden, falls erforderlich.

Anschließend an das Finish wird das Zerspanungswerkzeug 10 weiter geradlinig in Längsrichtung verfahren, bis der zweite Schneidenträger 20.2 des Werkzeugabschnitts 10.2, 10.3, der zu dem Werkzeugabschnitt 10.1, 10.2, der die erste Fase angebracht hat, entgegen der Vorschubrichtung des Zerspanungswerkzeugs 10 benachbart ist, für die Bearbeitung des ihm zugeordneten Lagerstegs LS1, LS2 positioniert ist, d.h. in den Fign. 2 und 4 rechts von ihm positioniert ist bzw. sich an dessen rechter Ecke befindet. Durch die Drehbewegung des Zerspanungswerkzeugs 10 wird schließlich die zweite Fase an den Lagerstegen LS1, LS2 angebracht, die der ersten Fase in Längsrichtung der Lagergasse gegenüberliegend. Nach dem Finish und vor dem Anbringen dieser zweiten Fase können die Schneidenträger 20.1-20.4 wieder optional durch axiales Verschieben der Stellstange 16 ein- bzw. ausgefahren werden, falls gewünscht.

Die für das Anbringen der Fasen zuständigen Schneidenträger 20.2 eines jeden Werkzeugabschnitts 10.1, 10.2 werden also jeweils für die Bearbeitung zweier benachbarter Lagerstege LS1, LS2 eingesetzt, nämlich in Längsrichtung der Lagergasse gesehen für die Bearbeitung des Lagerstegs LS1 links von dem jeweiligen Schneidenträger 20.2 und für die Bearbeitung des Lagerstegs LS2 rechts von dem jeweiligen Schneidenträger 20.2 (vgl. Fign. 2 und 4) bzw. für die Bearbeitung des Lagerstegs LS1 in Vorschubrichtung und für die Bearbeitung des Lagerstegs LS2 in Rückhubrichtung. Die Schneide des Schneidenträgers 20.2 weist somit zwei in Längsrichtung des Zerspanungswerkzeugs 10 entgegengesetzte Schneidflächen auf. Die jeweilige Schneidfläche der für das Schruppen, Semifinish und Finish eingesetzten Schneidenträger 20.1, 20.3, 20.4 weist in die für die jeweilige Bearbeitung vorgesehene axiale Bewegungsrichtung des Zerspanungswerkzeugs 10, d.h. in den Fign. 2 und 4 bei dem Schneidenträger 20.1 (Schruppen) nach rechts und bei den Schneidenträgern 20.3 (Semifinish) und 20.4 (Finish) nach links.

Die Anzahl der Werkzeugabschnitte 10.1, 10.2, die am Zerspanungswerkzeug 10 vorgesehen ist, ist vorzugsweise um eins höher als die Anzahl der zu bearbeitenden Lagerstege LS1, LS2, damit auch die an den beiden gegenüberliegenden Enden der Lagergasse befindlichen Lagerstege LS, LS1, LS2 vollständig mit dem Zerspanungswerkzeug 10 bearbeitet werden können.

Nach Beendigung der spanabtragenden Bearbeitung durch das Zerspanungswerkzeug 10 wird dessen Drehantrieb gestoppt und die Schneidenträger 20.1-20.4 werden durch axiales Verschieben der Stellstange 16, sodass die Schneidenträger 20.1-20.4 sich an den Kegelabschnitten 16b der Stellstange 16 abstützen, eingefahren. Danach wird das Zerspanungswerkzeug 10 in Längsrichtung geradlinig aus der Lagergasse ausgefahren.

Der (jeweilige) Schneidenträger 20, 20.1-20.4 ist in einer in dem Grundkörper 12 vorgesehenen Führungsaussparung 14 aufgenommen (vgl. Fig. 3), wobei sich die Führungsaussparung 14 senkrecht zur Drehachse des Grundkörpers 12 bzw. des Zerspanungswerkzeugs 10 erstreckt und vorzugsweise durch den Grundkörper 12 hindurchtritt, d.h. als Durchgangsaussparung ausgebildet ist. Der Schneidenträger 20 ist in der Führungsaussparung 14 quer zur Drehachse des Grundkörpers 16, insbesondere radial, verschiebbar angeordnet. Die Führungsaussparung 14 kann einen kreisförmigen oder elliptischen, aber auch einen rechteckigen, insbesondere quadratischen Querschnitt aufweisen, wobei der Schneidenträger 20 für eine bevorzugt formschlüssige Verbindung mit der Führungsaussparung 14 einen entsprechenden Querschnitt aufweist. Insbesondere ein rechteckiger, quadratischer oder elliptischer Querschnitt garantiert eine Verdrehsicherheit des Schneidenträgers 20 in der Führungsaussparung 14.

Ein jeder Schneidenträger 20 weist einen axialen Durchbruch 17, d.h. einen Durchbruch 17 in Längsrichtung des Zerspanungswerkzeugs 10, zur Aufnahme der Stellstange 16 auf, durch welchen die Stellstange 16 durchgeführt ist. Insbesondere, wenn dem jeweiligen Schneidenträger 20 eine zusätzliche, weiter unten beschriebene Justiereinrichtung 22 zugeordnet ist, ist der Durchmesser des Durchbruchs 17 des Schneidenträgers 20 derart, dass die Stellstange 16 lose, d.h. mit Spiel (Spielraum 19) insbesondere in Verschieberichtung des Schneidenträgers 20, durch den Durchbruch 17 durchgeführt wird/ist, so dass der Schneidenträger 20, auch wenn er auf einem Zylinderabschnitt 16a der Stellstange 16 abgestützt ist, noch mittels der später beschriebenen Justiereinrichtung 22 in seiner Verschieberichtung verschoben werden kann.

Der (jeweilige) Schneidenträger 20 ist vorzugsweise gegenüber dem Grundkörper 12 elastisch, insbesondere federnd, abgestützt. So ist der Schneidenträger 20 an seinem dem Schneidelement 24 gegenüberliegenden Ende mit einer sich senkrecht zur Erstreckungsrichtung/Verschieberichtung des Schneidenträgers 20 und vorzugsweise senkrecht zur Drehachse des Grundkörpers 12 erstreckenden Traverse 26 verbunden, die federnd am Grundkörper 12 gelagert ist. D.h. der Schneidenträger 20 ist über die Traverse 26 federnd am Grundkörper 12 abgestützt. Zur Befestigung der Traverse 26 an dem Schneidenträger 20 kann an dem dem Schneidelement 24 gegenüberliegenden Ende des Schneidenträgers 20 eine Nut 28, insbesondere eine Gewindebohrung, die auch als Durchgangsbohrung zur Durchbruch 17 ausgestaltet sein kann, vorgesehen sein, in die eine Schraube 32, die durch ein von außerhalb des Grundkörpers 12 zugreifbares, durchgehendes Durchgangsloch 30, insbesondere eine Durchgangsbohrung, das auf die Einbuchtung 28 ausgerichtet ist, geführt ist, geschraubt ist. Auf ihrer dem Schneidenträger 20 abgewandten Seite ist die Traverse 26 vorzugsweise abgerundet, wobei der Rundungsradius bevorzugt dem Radius des Grundkörpers 12 entspricht.

In der die Führungsaussparung 14 umgebenden Wand des Grundkörpers 12 sind vorzugsweise beidseits des Schneidenträgers 20 Ausnehmungen 34 vorgesehen, in welchen Abstützelemente 36, beispielsweise Stifte, festgelegt sind, die in den Ausnehmungen 34 gegenüberliegenden Ausnehmungen 38 im Schneidenträger 20, die an dessen Außenwand geöffnet sind, hineinragen. Die Abstützelemente 36 erstrecken sich senkrecht zur Drehachse des Grundkörpers 12 und senkrecht zur Verschieberichtung des Schneidenträgers 20 und ragen unterhalb der Traverse 26 in die im Schneidenträger 20 vorgesehenen Ausnehmungen 38 hinein. D.h. die Traverse 26 erstreckt sich seitlich über die Ausnehmungen 38. Über die sowohl in den Ausnehmungen 34 des Grundkörpers 12 als auch in den Ausnehmungen 38 des Schneidenträgers 20 vorgesehenen Abstützelemente 36 ist der Schneidenträger 20 gegen eine Verdrehung gesichert.

Zur federnden Lagerung der Traverse 26 und somit des Schneidenträgers 20 am Grundkörper 12 sind in den auf entgegengesetzten Seiten des Schneidenträgers 20 vorgesehenen Ausnehmungen 38 Druckfedern 40 vorgesehen, welche sich traversenseitig an den Abstützelementen 36 abstützen und in Verschieberichtung des Schneidenträgers 20 auf die sich quer zum Schneidenträger 20 erstreckende Traverse 26, insbesondere auf die seitlich in die Ausnehmungen 38 ragenden Enden/Endbereiche der Traverse 26, drücken. Vorzugsweise ist jedem Ende/Endbereich der Traverse 26 eine Druckfeder 40 zugeordnet. An den Enden/Endbereichen der Traverse 26 können Stifte 42 vorgesehen sein, welche in Längsrichtung/Verschieberichtung des Schneidenträgers 20 in die Ausnehmungen 38 hineinragen, jedoch nur soweit, dass sie insbesondere in demjenigen Verschiebezustand des Schneidenträgers 20, wenn die Außenseite der Traverse 26 bündig mit der Außenwand des Grundkörpers 12 verläuft, um einen vorbestimmten Abstand von der ihnen zugewandten Seite des ihnen zugeordneten Abstützelements 36 beabstandet sind. Die Stifte 42 können von den Druckfedern 40 umgeben sein. Dieser vorbestimmte Abstand bestimmt, wieweit der jeweilige Schneidenträger 20 und somit dessen Schneidelement 24 in der Verschieberichtung des Schneidenträgers 20 radial nach außen verschoben werden kann. Die Ausnehmungen 34 können in radialer Richtung durchgehend sein, so dass von außen auf die Abstützelemente 36 zugegriffen werden kann, beispielsweise um die Federkraft/Federvorspannung der Druckfedern 40 einzustellen bzw. zu verstellen.

Gemäß alternativer Ausgestaltung kann sich die Traverse 26 auch in Richtung der Drehachse des Grundkörpers 12 über den Schneidenträger 20 hinaus in den Grundkörper 12 hinein erstrecken und in diesem über entsprechende Druckfedern 40 federnd gelagert sein, die sich in entsprechenden Ausnehmungen am Grundkörper 12 abstützen. Dies würde jedoch in Längsrichtung des Grundkörpers 12 zu einer längeren Ausdehnung von Schneidenträger 20 mit Traverse 26 führen.

Dem bzw. einem Schneidenträger 20 kann eine Justiereinrichtung 22 zugeordnet sein, die in den Schneidenträger 20 integriert ist (vgl. Fign. 2 und 3). Je nach Verwendung der Schneide des Schneidenträgers 20 muss dem Schneidenträger 20 jedoch nicht zwingend eine Justiereinrichtung 22 zugeordnet sein. So kann insbesondere wie eingangs beschrieben insbesondere bei Schneiden, die für grobe Bearbeitungen (z.B. Schruppen) oder für Bearbeitungen, bei denen eine hochpräzise Ausführung (zum Beispiel im Mikrometerbereich) nicht erforderlich ist (z.B. beim Anbringen einer Fase), eingesetzt werden, auf eine Justiereinrichtung 22 verzichtet werden.

Mittels der Justiereinrichtung 22 kann die Lage des Schneidenträgers 20 gegenüber der Stellstange 16 eingestellt werden. Der Schneidenträger 20 weist eine Führungsaussparung 44, vorzugsweise in Form eines Durchbruchs, auf, in welcher die Justiereinrichtung 22 vorzugsweise formschlüssig angeordnet ist, sodass sich die Justiereinrichtung 22 im Schneidenträger 20 quer zur Drehachse des Grundkörpers 12 und quer zur Verschieberichtung des Schneidenträgers 20 erstreckt. Entsprechend verläuft die Führungsaussparung 44 einerseits senkrecht zur im Grundkörper 12 vorgesehenen Führungsaussparung 14 und andererseits senkrecht zur Drehachse des Grundkörpers 12. Die im Schneidenträger 20 vorgesehene Führungsaussparung 44 weist vorzugsweise einen rechteckigen, insbesondere einen quadratischen, Querschnitt auf, sodass zum Beispiel eine Verdrehung der Justiereinrichtung 22 in der Führungsaussparung 14 verhindert werden kann. Entsprechendes gilt für die im Grundkörper 12 vorgesehene Führungsaussparung 14 beispielsweise zur Verdrehsicherung des Schneidenträgers 12, der dann ebenfalls einen rechteckigen bzw. quadratischen Querschnitt aufweist.

Die Justiereinrichtung 22 weist ein vorzugsweise als axial verschiebbare Gewindehülse ausgestaltetes Stellelement 46 und einen Gewindetrieb mit einer Antriebsspindel 48 auf. Unter der axialen Verschiebbarkeit der Gewindehülse 46 wird eine Verschiebbarkeit entlang der Längsachse der Führungsaussparung 44, d.h. senkrecht zur Drehachse des Grundkörpers 12 und senkrecht zur Verschieberichtung des Schneidenträgers 20 verstanden. Bevorzugt umfasst der Gewindetrieb ferner eine feststehende Gewindebuchse 50 (auch Lagerbuchse genannt), die vorzugsweise fest, d.h. verdrehsicher und unverschiebbar, in der Führungsaussparung 44 und zwar bevorzugt an einem gewindehülsenfernen Ende der Führungsaussparung 44 angeordnet. Zur festen Verankerung kann die Gewindebuchse 50 beispielsweise durch Presspassung, Löten, Kleben oder dergleichen dreh- und axialfest in der Führungsaussparung 44 im Schneidenträger 20 verankert sein. Die Gewindehülse 46 und die Gewindebuchse 50 weisen vorzugsweise einen rechteckigen, insbesondere quadratischen Außenumfang auf entsprechend der Führungsaussparung 44.

Die Antriebsspindel ist vorzugsweise als Differentialgewindespindel 48 (auch Differentialgewindeschraube genannt) ausgestaltet und weist einen ersten Gewindeabschnitt 48a und einen zweiten Gewindeabschnitt 48b auf. Der erste Gewindeabschnitt 48a ist mit einer nicht näher bezeichneten Gewindebohrung der Gewindehülse 46 verschraubt, während der zweite Gewindeabschnitt 48b mit einer nicht näher bezeichneten Gewindebohrung der Gewindebuchse 50 verschraubt ist. Der erste Gewindeabschnitt 48a und der zweite Gewindeabschnitt 48b haben ungleiche Gewindesteigungen (Ganghöhen), aber gleiche Gewinderichtungen (Gangrichtungen). Bei einer Drehbetätigung der Differentialgewindespindel 48 bewegt sich die Gewindehülse 46 daher entlang der nicht näher bezeichneten Spindelachse der Differentialgewindespindel 48 um eine Strecke, die dem Steigungsunterschied der beiden Gewindeabschnitte 48a, 48b der Differentialgewindespindel 48 entspricht. Die Spindelachse erstreckt sich senkrecht zur Verschieberichtung des Schneidenträgers 20 und senkrecht zur Drehachse des Grundkörpers 12. Aufgrund des Steigungsunterschieds kann die Gewindehülse 46 durch Verdrehung der Differentialgewindespindel 48 sehr präzise verschoben werden. So können die Gewindesteigungen der Gewindeabschnitte 48a, 48b beispielsweise so festgelegt sein, dass die Gewindehülse 46 pro Umdrehung der Differentialgewindespindel 48 um 0,1 mm verschoben wird. Für eine solche Verschiebung kann die Gewindebuchse 50 insbesondere eine Steigungsschräge von 5,75° aufweisen. Der Justiereinrichtung 22 bzw. deren Differentialgewindespindel 48 kann eine nicht dargestellte Schmiermittelzufuhr zugeordnet sein.

Zur Drehbetätigung ist die Antriebsspindel bzw. die Differentialgewindespindel 48 an ihrem gewindebuchsenfernen Ende mit einem Betätigungselement 52 drehfest, in axialer Richtung aber verschiebbar verbunden. Das Betätigungselement 52 umfasst vorzugsweise einen Skalenring 54 (vgl. Fig. 4) und ist eingangs in der Führungsaussparung 44 im Grundkörper 16, vorzugsweise über einen Federring 56, drehbar gelagert. Zur Aufnahme des Betätigungselements 52 ist die Führungsaussparung 44 vorzugsweise entsprechend dem Querschnitt des Betätigungselements 52 aufgeweitet. Auf das Betätigungselement 52 kann von außerhalb des Grundkörpers 12, beispielsweise mit Hilfe eines geeigneten Werkzeugs, zugegriffen werden. Der Grundkörper 12 weist eine entsprechende, nach außen offene Ausnehmung 58 auf. Wie in Fig. 4 angedeutet, kann der Skalenring 44 beispielsweise 10 Marken/Markierungen aufweisen, sodass eine Zustell-/Einstellgenauigkeit von beispielsweise 0,001 mm im Halbmesser erzielt werden kann.

Das vorzugsweise als Gewindehülse 46 ausgebildete Stellelement weist eine Steuerschräge 60 auf, an welcher sich der Schneidenträger 20 an der Stellstange 16 abstützt. Hierzu ist in der Führungsaussparung 44 eine nicht näher bezeichnete Öffnung in Richtung auf die Stellstange 16 vorgesehen, aus welcher die Steuerschräge 60 hinausragt und auf der Stellstange 16 zu liegen kommt. Das vorzugsweise als Gewindehülse 46 ausgebildete Stellelement kann hierfür ein radial abstehendes/auskragendes Auskragungselement 62 umfassen, welches einstückig mit dem restlichen Stellelement 46 ausgebildet sein kann, aber nicht muss, und welches durch die nicht näher bezeichnete Öffnung in der Führungsaussparung 44 ragt und sich mit seiner Steuerschräge 60 an der Stellstange 16 abstützt. Die Steuerschräge 60 bildet mit der Drehachse der Differentialgewindespindel 48 einen schiefen Winkel, insbesondere einen spitzen Winkel.

Zur Einführung der mit dem Auskragungselement 62 versehenen Justiereinrichtung 22 ist in dem Schneidenträger 20 eine sich senkrecht zur Verschieberichtung des Schneidenträgers 20 und senkrecht zur Drehachse des Grundkörpers 12 erstreckende Ausnehmung 70 vorgesehen, die zu der der Führungsaussparung 14 gegenüberliegenden Seitenwand des Schneidenträgers 20 und auf ihrer entgegengesetzten Seite zum Spielraum 19 hin geöffnet ist. In der Verschieberichtung des Schneidenträgers 20 gesehen ist die Ausnehmung 70 ausreichend dimensioniert, um das Auskragungselement 62 bzw. dessen über die Gewindehülse 46 überstehenden Teil bei einer Einfuhr der Justiereinrichtung 22 in den Schneidenträger 20, insbesondere bei der Herstellung, aufzunehmen.

Wird nun die Differentialgewindespindel 48 mittels des Betätigungselements 52 gedreht, so verschiebt sich das Stellelement in Form der Gewindehülse 46 entlang der Drehachse/Spindelachse der Differentialgewindespindel 48. Dabei verschiebt sich die Steuerschräge 60 des Stellelements 46 bzw. des Auskragungselements 62 ebenfalls entlang der Drehachse/Spindelachse der Differentialgewindespindel 48 und zwar auf der sich nicht in Querrichtung verschiebenden Stellstange 16. Der sich über die Steuerschräge 60 an der Stellstange 16 abstützende Schneidenträger 20 wird durch die formschlüssige Anordnung des Schneidenträgers 20 in der Führungsaussparung 14 an einer Bewegung entlang der Drehachse der Differentialgewindespindel 48 gehindert und bei Verschiebung der Steuerschräge 60 entlang der Spindelachse aufgrund seiner federnden Lagerung senkrecht zur Drehachse der Differentialgewindespindel 48 und außerdem senkrecht zur Drehachse des Grundkörpers 12 in der Führungsaussparung 14 verschoben, sodass das Schneidelement 24 entweder in radialer Richtung vom Grundkörper 12 weg oder auf diesen zu (oder je nach Ausgestaltung sogar in diesen hinein) bewegt wird. Diese radiale Verschiebung erfolgt vorteilhafterweise ohne eine Drehung des Schneidelements 24 bzw. von dessen Schneide um die Drehachse des Grundkörpers 12 herum, sodass eine präzise(re) Einstellung des Schneidelements 24 bzw. von dessen Schneide erzielt werden kann.

Die Justiereinrichtung 22 kann insbesondere für einen Voreinstellung der Lage des (jeweiligen) Schneidenträgers 20 gegenüber der Stellstange 16 bei der Herstellung des erfindungsgemäßen Zerspanungswerkzeugs 10 eingesetzt werden. Ferner ist mittels der Justiereinrichtung 22 eine Nachjustierung beispielsweise bei Schneidenverschleiß im Gebrauch des Zerspanungswerkzeugs 10 möglich, ohne dass dazu der Schneidenträger 20 dem Zerspanungswerkzeug 10 entnommen werden müsste.

Durch die Integration der Justiereinrichtung 22 in den Schneidenträger 20 und die Ausrichtung der Justiereinrichtung 22 senkrecht zur Drehachse des Grundkörpers 12 und senkrecht zur Verschieberichtung des Schneidenträgers 20 wird ein kompakt aufgebauter, justierbarer Schneidenträger 20 erhalten, der sich insbesondere in Längsrichtung des Zerspanungswerkzeugs 10 durch eine kurze Ausdehnung auszeichnet, sodass vorteilhafterweise an einem erfindungsgemäßen Zerspanungswerkzeug 10 eine im Vergleich zum Stand der Technik hohe Anzahl von Schneidenträgern 10 vorgesehen sein kann, die insbesondere unterschiedliche, vorzugsweise sämtliche für die Bearbeitung eines Werkstücks benötigten, Bearbeitungsschritte (z.B. Schruppen, SEMI-Finish, Finish, beidseitiges Versehen mit einer Fase) ausführen können.

Selbstverständlich sind Abwandlungen von dem zuvor beschriebenen Ausführungsbeispiel möglich, ohne den durch die Ansprüche definierten Grundgedanken der Erfindung zu verlassen.

In der gezeigten Ausführungsform ist das vorzugsweise als Gewindehülse ausgestaltete Stellelement unmittelbar an der Stellstange abgestützt. Alternativ dazu kann zwischen dem Stellelement und der Stellstange wenigstens ein weiteres druckübertragendes Element angeordnet sein.

In der gezeigten Ausführungsform stützt sich jeder Schneidenträger an der im Grundkörper des Zerspanungswerkzeugs axial verschiebbar geführten Stellstange ab. Jedoch kann, wenn der Zerspanungswerkzeug über keine Stellstange verfügt, das Stellelement unmittelbar oder mittelbar an einer im Grundkörper vorgesehenen Steuerfläche, beispielsweise an einer insbesondere gerundeten Bodenfläche abgestützt sein.

In der gezeigten Ausführungsform erfolgt die axiale Verschiebung der Stellstange fluidisch, im Besonderen durch Beaufschlagung des an dem schnittstellenseitigen Ende des Zerspanungswerkzeugs befindlichen, über eine Druckfeder am Grundkörper abgestützten Kolbens mit Kühlschmiermitteldruck. Alternativ dazu kann eine axiale Verschiebung der Stellstange auch hydraulisch, pneumatisch, elektromotorisch oder elektromagnetisch eingeleitet werden. Das Zerspanungswerkzeug kann zu diesem Zweck einen hydraulisch, pneumatisch, elektromotorisch oder elektromagnetisch arbeitenden Stellantrieb aufweisen, der die Stellstange axial antreibt.

Abgesehen von einer spanenden Bearbeitung einer Lagergasse kann das erfindungsgemäße Zerspanungswerkzeug für jedwede Nachbearbeitung oder Feinbearbeitung einer Bohrung auf einen vorgegebenen Nenndurchmesser verwendet wird. Das erfindungsgemäße Zerspanungswerkzeug kann daher auch für die Bearbeitung einer Kolbenbohrung in einem Zylinderkurbelgehäuse oder dergleichen eingesetzt werden. In diesem Fall kann es genügen, wenn das Zerspanungswerkzeug nur einen einzigen Schneidenträger aufweist.

Ferner sind bei der gezeigten Ausführungsform, wie sie insbesondere in Fign. 1, 2 und 4 dargestellt ist, mehrere Schneidenträger bzw. Schneidelemente in vorgegebenen axialen Abständen entlang des Grundkörpers des Zerspanungswerkzeugs in einer Reihe angeordnet. Die Anordnung in einer Reihe ist jedoch nicht zwingend. Die in den vorgegebenen axialen Abständen angeordneten Schneidenträger können in Umfangsrichtung voneinander versetzt, beispielsweise wendelförmig, angeordnet sein, wobei den einigen Schneidenträgern zugeordnete Justiereinrichtungen bzw. Stellelemente senkrecht zu der Verschieberichtung des ihnen zugeordneten Schneidenträgers ausgerichtet/angeordnet sind. Durch die in Umfangsrichtung versetzte Anordnung können je nach Einsatzgebiet des Zerspanungswerkzeugs die axialen Abstände zwischen den Schneidenträgern weiter verkürzt werden, sodass am Grundkörper noch mehr Schneidenträger angeordnet werden können. Eine in Umfangsrichtung versetzte Anordnung bietet daher eine größere Gestaltungsflexibilität.

## Patentansprüche

1. Zerspanungswerkzeug (10) mit einem um eine Drehachse drehantreibbaren Grundkörper (12), wenigstens einem am Grundkörper (12) radial einstellbar angeordneten Schneidenträger (20) und einer Stelleinrichtung (16) zur Einstellung der Lage des Schneidenträgers (20) gegenüber dem Grundkörper (12), wobei
der Schneidenträger (20) in einer Führungsaussparung (14) im Grundkörper (12) quer zur Drehachse verschiebbar angeordnet ist, und
die Stelleinrichtung (16) eine im Grundkörper (12) axial verschiebbar angeordnete Stellstange aufweist, an der der Schneidenträger (20) abgestützt ist,
eine in den Schneidenträger (20) integrierte Justiereinrichtung (22) zur Justierung der Lage des Schneidenträgers (20) gegenüber der Stellstange, wobei die Justiereinrichtung (22) ein an der Stellstange abgestütztes Stellelement (46) und einen das Stellelement (46) relativ zum Schneidenträger (22) verstellenden Gewindetrieb aufweist, **dadurch gekennzeichnet, dass**
das Stellelement (46) aus einer Gewindehülse (46) mit einer Steuerschräge (62) gebildet ist, an der der Schneidenträger (20) abgestützt ist, und
der Gewindetrieb (48, 50) eine mit der Gewindehülse (46) verschraubte, am Schneidenträger (20) gelagerte Antriebsspindel (48) aufweist.

2. Zerspanungswerkzeug (10) nach Anspruch 1, **dadurch gekennzeichnet, dass** der Schneidenträger (20) in der Führungsaussparung (14) formschlüssig aufgenommen ist.

3. Zerspanungswerkzeug (10) nach Anspruch 1 oder 2, **dadurch gekennzeichnet, dass** der Schneidenträger (20) in der Führungsaussparung (14) verdrehsicher aufgenommen ist.

4. Zerspanungswerkzeug (10) nach einem der vorhergehenden Ansprüche, **dadurch gekennzeichnet, dass** die Führungsaussparung (14) als eine Durchgangsaussparung ausgebildet ist.

5. Zerspanungswerkzeug (10) nach einem der vorhergehenden Ansprüche, **dadurch gekennzeichnet, dass** der Schneidenträger (20) einen axialen Durchbruch (17) aufweist, in dem die Stellstange aufgenommen ist.

6. Zerspanungswerkzeug (10) nach einem der vorhergehenden Ansprüche, **dadurch gekennzeichnet, dass** der Schneidenträger (20) gegenüber dem Grundkörper (12) elastisch abgestützt ist.

7. Zerspanungswerkzeug (10) nach einem der vorhergehenden Ansprüche, **dadurch gekennzeichnet, dass** die Stellstange mit einem in einem Druckraum im Grundkörper (12) angeordneten Kolbenelement verbunden ist.

8. Zerspanungswerkzeug (10) nach Anspruch 7, **dadurch gekennzeichnet, dass** das Kolbenelement gegenüber dem Grundkörper (12) elastisch abgestützt ist.

9. Zerspanungswerkzeug (10) nach einem der vorhergehenden Ansprüche, **dadurch gekennzeichnet, dass**
der Gewindetrieb eine im Schneidenträger (20) in einem Abstand zur Gewindehülse festgelegte Gewindebuchse (50) aufweist, und
die Antriebsspindel (48) als eine Differentialgewindespindel ausgebildet ist, die mit einem ersten Gewindeabschnitt (48a) mit der Gewindehülse und mit einem zweiten Gewindeabschnitt (48b) mit der Gewindebuchse (50) verschraubt ist.

10. Zerspanungswerkzeug (10) nach Anspruch 9, **dadurch gekennzeichnet, dass** zwischen der Gewindehülse und der Gewindebuchse (50) eine Druckfeder angeordnet ist.

11. Zerspanungswerkzeug (10) nach Anspruch 9 oder 10, **dadurch gekennzeichnet, dass** die Justiereinrichtung (22) ein am Schneidenträger (20) drehbeweglich gehaltenes Betätigungselement (42) aufweist, das mit der Differentialgewindespindel drehfest und in Verschieberichtung der Gewindehülse verschiebbar verbunden ist.

12. Zerspanungswerkzeug (10) nach einem der vorhergehenden Ansprüche, **gekennzeichnet durch** eine Vielzahl von Schneidenträgern (20), die jeweils in einer Führungsaussparung (14) im Grundkörper (12) quer zur Drehachse verschiebbar angeordnet und an der Stellstange abgestützt sind.

13. Zerspanungswerkzeug (10) nach Anspruch 12, **dadurch gekennzeichnet, dass** die Schneidenträger (20) über die Stellstange synchron verschiebbar sind.

14. Zerspanungswerkzeug (10) nach Anspruch 12 oder 13, **dadurch gekennzeichnet, dass** das Zerspanungswerkzeug (10) einen Werkzeugabschnitt (10.1) mit einem ersten Schneidenträger (20.1), der mit einer für eine schruppende Bearbeitung konfigurierten Schneide ausgestattet ist, einem zweiten Schneidenträger (20.2), der mit einer für ein Anbringen einer Fase konfigurierten Schneide ausgestattet ist, einem dritten Schneidenträger (20.3), der mit einer für eine Semifinish-Bearbeitung konfigurierten Schneide ausgestattet ist, und einem vierten Schneidenträger (20.4), der mit einer für eine Finish-Bearbeitung konfigurierten Schneide ausgestattet ist, aufweist.

15. Zerspanungswerkzeug (10) nach Anspruch 14, **dadurch gekennzeichnet, dass** der vierte Schneidenträger (20.4) und der dritte Schneidenträger (20.3) je eine Justiereinrichtung (22) zur Justierung der Lage des jeweiligen Schneidenträgers (20.3; 20.4) gegenüber der Stelleinrichtung (16) aufweist, wobei der erste Schneidenträger (20.1) und der zweite Schneidenträger (20.2) keine solche Justiereinrichtung (22) aufweisen.

16. Zerspanungswerkzeug (10) nach Anspruch 14 oder 15, **dadurch gekennzeichnet, dass** in Längsrichtung des Zerspanungswerkzeugs (10) der erste Schneidenträger (20.1), der zweite Schneidenträger (20.2), der vierte Schneidenträger (20.4) und der dritte Schneidenträger (20.3) in der genannten Reihenfolge aufeinander folgen.

17. Zerspanungswerkzeug (10) nach einem der Ansprüche 14 bis 16, **dadurch gekennzeichnet, dass** das Zerspanungswerkzeug (10) pro zu bearbeitendem Lagersteg (LS, LS1, LS2) einer Lagergasse wenigstens zwei in Längsrichtung des Zerspanungswerkzeugs (10) benachbarte Werkzeugabschnitte (10.1, 10.2) aufweist.

18. Verfahren zum Bearbeiten einer Lagergasse mit mehreren in Längsrichtung beabstandet angeordneten Lagerstegen (LS, LS1, LS2) auf einen vorgegebenen Nenndurchmesser mittels eines Zerspanungswerkzeugs (10) nach Anspruch 17, **gekennzeichnet durch** die folgenden Schritte:
- zentriertes und geradliniges Einfahren des Zerspanungswerkzeugs (10) in die Lagergasse, wobei die Schneidenträger (20; 20.1-20.4) in eingefahrener Stellung sind, bis die ersten Schneidenträger (20.1) der Werkzeugabschnitte (10.1) für die Bearbeitung der Lagerstege (LS1) positioniert sind;
- Verstellen der Schneidenträger (20; 20.1-20.4) in ihre ausgefahrene Stellung mittels der Stelleinrichtung (16),
- Schruppende Bearbeitung der Lagerstege (LS) mittels der ersten Schneidenträger (20.1) durch Drehbewegung des Grundkörpers (12),
- geradliniges Weiterverfahren des Zerspanungswerkzeugs (10) bis die zweiten Schneidenträger (20.2) der Werkzeugabschnitte (10.1) für die Bearbeitung der Lagerstege (LS1) positioniert sind,
- Anbringen einer einseitigen Fase an die Lagerstege (LS1) mittels der zweiten Schneidenträger (20.2) durch Drehbewegung des Grundkörpers (12),
- Verstellen der Schneidenträger (20; 20.1-20.4) in ihre eingefahrene Stellung mittels der Stelleinrichtung (16),
- -geradliniges Verfahren des Zerspanungswerkzeugs (10) in die Gegenrichtung bis die dritten Schneidenträger (20.3) der benachbarten Werkzeugabschnitte (10.2) für die Bearbeitung der Lagerstege (LS1) positioniert sind,
- Verstellen der Schneidenträger (20; 20.1-20.4) in ihre ausgefahrene Stellung mittels der Stelleinrichtung (16),
- Semifinish-Bearbeitung der Lagerstege (LS1) mittels der dritten Schneidenträger (20.3) der benachbarten Werkzeugabschnitte (10.2) durch Drehbewegung des Grundkörpers (12),
- geradliniges Weiterverfahren des Zerspanungswerkzeugs (10) bis die vierten Schneidenträger (20.4) der benachbarten Werkzeugabschnitte (10.2) für die Bearbeitung der Lagerstege (LS1) positioniert sind,
- Finish-Bearbeitung der Lagerstege (LS1) mittels der vierten Schneidenträger (20.4) der benachbarten Werkzeugabschnitte (10.2) durch Drehbewegung des Grundkörpers (12),
- geradliniges Weiterverfahren des Zerspanungswerkzeugs (10) bis die zweiten Schneidenträger (20.2) der benachbarten Werkzeugabschnitte (10.2) für die Bearbeitung der Lagerstege (LS1) positioniert sind,
- Anbringen einer einseitigen Fase an die Lagerstege (LS) auf der Seite, auf welcher noch keine Fase angebracht worden ist, mittels der zweiten Schneidenträger (20.2) der benachbarten Werkzeugabschnitte (10.2) durch Drehbewegung des Grundkörpers (12),
- Verstellen der Schneidenträger (20; 20.1-20.4) in ihre eingefahrene Stellung mittels der Stelleinrichtung (16), und
- geradliniges Ausfahren des Zerspanungswerkzeugs (10) aus der Lagergasse.

19. Verfahren nach Anspruch 18, **dadurch gekennzeichnet, dass** die Schneidenträger (20; 20.1-20.4) mittels einer im Grundkörper (12) des Zerspanungswerkzeugs (10) axial verschiebbar angeordneten Stellstange der Stelleinrichtung (16) radial in ihre eingefahrene Stellung und ihre ausgefahrene Stellung verstellt werden.

## Claims

1. A cutting tool (10) comprising a main part (12), which can be rotationally driven about a rotational axis, at least one cutting insert holder (20) arranged on the main part (12) such that it can be radially set, and a setting device (16) for setting the position of the cutting insert holder (20) relative to the main part (12), wherein
the cutting insert holder (20) is arranged in a guide recess (14) in the main part (12) such that it can be moved transversely to the rotational axis, and
the setting device (16) has a setting rod, which is arranged in the main part (12) such that it can be moved axially and supports the cutting insert holder (20),
an adjusting device (22), which is integrated in the cutting insert holder (20), for adjusting the position of the cutting insert holder (20) in relation to the setting rod, wherein the adjusting device (22) has a setting element (46) supported on the setting rod and a threaded drive, which displaces the setting element (46) relative to the cutting insert holder (22), **characterized in that**
the setting element (46) is formed of a threaded sleeve (46) comprising a control slope (62), on which the cutting insert holder (20) is supported, and
the threaded drive (48, 50) has a drive spindle (48), which is screw-connected to the threaded sleeve (48) and is mounted on the cutting insert holder (20).

2. The cutting tool (10) according to claim 1, **characterized in that** the cutting insert holder (20) is received in a positive manner in the guide recess (14).

3. The cutting tool (10) according to claim 1 or 2, **characterized in that** the cutting insert holder (20) is received so as to be secured against rotation in the guide recess (14).

4. The cutting tool (10) according to one of the preceding claims, **characterized in that** the guide recess (14) is formed as a through recess.

5. The cutting tool (10) according to one of the preceding claims, **characterized in that** the cutting insert holder (20) has an axial aperture (17), in which the setting rod is received.

6. The cutting tool (10) according to one of the preceding claims, **characterized in that** the cutting insert holder (20) is supported elastically in relation to the main part (12).

7. The cutting tool (10) according to one of the preceding claims, **characterized in that** the setting rod is connected to a piston element, which is arranged in a pressure chamber in the main part (12).

8. The cutting tool (10) according to claim 7, **characterized in that** the piston element is supported elastically in relation to the main part (12).

9. The cutting tool (10) according to one of the preceding claims, **characterized in that**
the threaded drive has a threaded bushing (50), which is secured in the cutting insert holder (20) at a distance from the threaded sleeve, and
the drive spindle (48) is formed as a differential threaded spindle, which is screw-connected with a first threaded portion (48a) to the threaded sleeve and with a second threaded portion (48b) to the threaded bushing (50).

10. The cutting tool (10) according to claim 9, **characterized in that** a compression spring is arranged between the threaded sleeve and the threaded bushing (50).

11. The cutting tool (10) according to claim 9 or 10, **characterized in that** the adjusting device (22) has an actuating element (42), which is held on the cutting insert holder (20) such that it can be rotationally moved and which is connected to the differential threaded spindle in a rotationally fixed manner and such that it can move in the direction of movement of the threaded sleeve.

12. The cutting tool (10) according to one of the preceding claims, **characterized by** a plurality of cutting insert holders (20), which are each arranged in a guide recess (14) in the main part (12) such that they can be moved transversely to the rotational axis, and are supported on the control rod.

13. The cutting tool (10) according to claim 12, **characterized in that** the cutting insert holders (20) can be moved synchronously via the setting rod.

14. The cutting tool (10) according to claim 12 or 13, **characterized in that** the cutting tool (10) has a tool portion (10.1) comprising a first cutting insert holder (20.1), equipped with a cutting insert configured for rough machining, a second cutting insert holder (20.2), equipped with a cutting insert configured for attaching a bezel, a third cutting insert holder (20.3), equipped with a cutting insert configured for semi-finishing, and a fourth cutting insert holder (20.4), equipped with a cutting insert configured for finishing.

15. The cutting tool (10) according to claim 14, **characterized in that** the fourth cutting insert holder (20.4) and the third cutting insert holder (20.3) each has an adjusting device (22) for adjusting the position of the respective cutting insert holder (20.3; 20.4) in relation to the setting device (16), wherein the first cutting insert holder (20.1) and the second cutting insert holder (20.2) do not have an adjusting device (22) of this type.

16. The cutting tool (10) according to claim 14 or 15, **characterized in that** in the longitudinal direction of the cutting tool (10) (10), the first cutting insert holder (20.1), the second cutting insert holder (20.2), the fourth cutting insert holder (20.4), and the third cutting insert holder (20.3) follow one another in the mentioned sequence.

17. The cutting tool (10) according to one of claims 14 to 16, **characterized in that**, for each bearing web (LS, LS1, LS2), which is to be machined, of a bearing tunnel, the cutting tool (10) has at least two tool portions (10.1, 10.2), which are adjacent in the longitudinal direction of the cutting tool (10).

18. A method for machining a bearing tunnel comprising several bearing webs (LS, LS1, LS2), which are arranged spaced apart from one another in the longitudinal direction, to a predetermined nominal diameter by means of a cutting tool (10) according to claim 17, **characterized by** the following steps:
- moving the cutting tool (10) into the bearing tunnel in a centered and straight manner, wherein the cutting insert holders (20; 20.1-20.4) are in the moved-in position, until the first cutting insert holders (20.1) of the tool portions (10.1) are positioned for machining the bearing webs (LS1);
- displacing the cutting insert holders (20; 20.1-20.4) into their moved-out position by means of the setting device (16),
- rough machining of the bearing webs (LS) by means of the first cutting insert holders (20.1) by rotational movement of the main part (12),
- further moving the cutting tool (10) in a straight line until the second cutting insert holders (20.2) of the tool portions (10.1), are positioned for machining the bearing webs (LS1),
- attaching a one-sided bezel to the bearing webs (LS1) by means of the second cutting insert holders (20.2) by means of rotational movement of the main part (12),
- displacing the cutting insert holders (20; 20.1-20.4) into their moved-in position by means of the setting device (16),
- moving the cutting tool (10) in a straight line in the opposite direction, until the third cutting insert holders (20.3) of the adjacent tool portions (10.2), are positioned for machining the bearing webs (LS1),
- displacing the cutting insert holders (20; 20.1-20.4) into their moved-out position by means of the setting device (16),
- semi-finishing the bearing webs (LS1) by means of the third cutting insert holders (20.3) of the adjacent tool portions (10.2) by means of rotational movement of the main part (12),
- further moving the cutting tool (10) in a straight line until the fourth cutting insert holders (20.4) of the adjacent tool portions (10.2) are positioned for machining the bearing webs (LS1),
- finishing the bearing webs (LS1) by means of the fourth cutting insert holders (20.4) of the adjacent tool portions (10.2) by means of rotational movement of the main part (12),
- further moving the cutting tool (10) in a straight line until the second cutting insert holders (20.2) of the adjacent tool portions (10.2) are positioned for machining the bearing webs (LS1),
- attaching a one-sided bezel to the bearing webs (LS) on the side, on which no bezel has been attached yet, by means of the second cutting insert holders (20.2) of the adjacent tool portions (10.2) by means of rotational movement of the main part (12),
- displacing the cutting insert holders (20; 20.1-20.4) into their moved-in position by means of the setting device (16), and
- moving the cutting tool (10) out of the bearing tunnel in a straight line.

19. The method according to claim 18, **characterized in that** the cutting insert holders (20; 20.1-20.4) are displaced radially into their moved-in position and their moved-out position by means of a setting rod, which is arranged in the main part (12) of the cutting tool (10) of the setting device such that it can be axially moved.

## Revendications

1. Outil d'usinage par enlèvement de copeaux (10) avec un corps de base (12) entraînable en rotation autour d'un axe de rotation, au moins un porte-lame (20) agencé de manière réglable radialement au niveau du corps de base (12) et un dispositif de réglage (16) pour le réglage de la position du porte-lame (20) par rapport au corps de base (12), dans lequel
le porte-lame (20) est agencé de manière mobile dans un évidement de guidage (14) dans le corps de base (12) transversalement à l'axe de rotation, et
le dispositif de réglage (16) présente une tige de réglage agencée de manière mobile axialement dans le corps de base (12), contre laquelle le porte-lame (20) est en appui,
un dispositif d'ajustement (22) intégré dans le porte-lame (20) pour l'ajustement de la position du porte-lame (20) par rapport à la tige de réglage, dans lequel le dispositif d'ajustement (22) présente un élément de réglage (46) en appui contre la tige de réglage et un mécanisme fileté réglant l'élément de réglage (46) par rapport au porte-lame (22), **caractérisé en ce que**
l'élément de réglage (46) est formé par une douille filetée (46) avec un biais de commande (62), contre lequel le porte-lame (20) est en appui, et
le mécanisme fileté (48, 50) présente une broche d'entraînement (48) vissée à la douille filetée (46), logée au niveau du porte-lame (20).

2. Outil d'usinage par enlèvement de copeaux (10) selon la revendication 1, **caractérisé en ce que** le porte-lame (20) est reçu par complémentarité de formes dans l'évidement de guidage (14).

3. Outil d'usinage par enlèvement de copeaux (10) selon la revendication 1 ou 2, **caractérisé en ce que** le porte-lame (20) est reçu sans pouvoir tourner dans l'évidement de guidage (14).

4. Outil d'usinage par enlèvement de copeaux (10) selon l'une quelconque des revendications précédentes, **caractérisé en ce que** l'évidement de guidage (14) est réalisé comme un évidement traversant.

5. Outil d'usinage par enlèvement de copeaux (10) selon l'une quelconque des revendications précédentes, **caractérisé en ce que** le porte-lame (20) présente un perçage axial (17), dans lequel la tige de réglage est reçue.

6. Outil d'usinage par enlèvement de copeaux (10) selon l'une quelconque des revendications précédentes, **caractérisé en ce que** le porte-lame (20) est en appui élastiquement par rapport au corps de base (12).

7. Outil d'usinage par enlèvement de copeaux (10) selon l'une quelconque des revendications précédentes, **caractérisé en ce que** la tige de réglage est reliée à un élément de piston agencé dans un espace de pression dans le corps de base (12).

8. Outil d'usinage par enlèvement de copeaux (10) selon la revendication 7, **caractérisé en ce que** l'élément de piston est en appui élastiquement par rapport au corps de base (12).

9. Outil d'usinage par enlèvement de copeaux (10) selon l'une quelconque des revendications précédentes, **caractérisé en ce que**
le mécanisme fileté présente un manchon fileté (50) fixé dans le porte-lame (20) à une distance de la douille filetée, et
la broche d'entraînement (48) est réalisée comme une vis-mère différentielle qui est vissée avec une première section filetée (48a) à la douille filetée et avec une seconde section filetée (48b) au manchon fileté (50).

10. Outil d'usinage par enlèvement de copeaux (10) selon la revendication 9, **caractérisé en ce qu'**un ressort de pression est agencé entre la douille filetée et le manchon fileté (50).

11. Outil d'usinage par enlèvement de copeaux (10) selon la revendication 9 ou 10, **caractérisé en ce que** le dispositif d'ajustement (22) présente un élément d'actionnement (42) maintenu de manière mobile en rotation au niveau du porte-lame (20), qui est relié de manière fixe en rotation à la vis-mère différentielle et de manière mobile dans le sens de déplacement de la douille filetée.

12. Outil d'usinage par enlèvement de copeaux (10) selon l'une quelconque des revendications précédentes, **caractérisé par** une pluralité de porte-lames (20) qui sont agencés de manière mobile respectivement dans un évidement de guidage (14) dans le corps de base (12) transversalement à l'axe de rotation et en appui contre la tige de réglage.

13. Outil d'usinage par enlèvement de copeaux (10) selon la revendication 12, **caractérisé en ce que** les porte-lames (20) sont mobiles de manière synchrone par le biais de la tige de réglage.

14. Outil d'usinage par enlèvement de copeaux (10) selon la revendication 12 ou 13, **caractérisé en ce que** l'outil d'usinage par enlèvement de copeaux (10) présente une section d'outil (10.1) avec un premier porte-lame (20.1) qui est équipé d'une lame configurée pour un usinage de dégrossissage, un deuxième porte-lame (20.2) qui est équipé d'une lame configurée pour un montage d'un chanfrein, un troisième porte-lame (20.3) qui est équipé d'une lame configurée pour un usinage de semi-finition, et un quatrième porte-lame (20.4) qui est équipé d'une lame configurée pour un usinage de finition.

15. Outil d'usinage par enlèvement de copeaux (10) selon la revendication 14, **caractérisé en ce que** le quatrième porte-lame (20.4) et le troisième porte-lame (20.3) présentent chacun un dispositif d'ajustement (22) pour l'ajustement de la position du porte-lame (20.3 ; 20.4) respectif par rapport au dispositif de réglage (16), dans lequel le premier porte-lame (20.1) et le deuxième porte-lame (20.2) ne présentent aucun dispositif d'ajustement (22) de la sorte.

16. Outil d'usinage par enlèvement de copeaux (10) selon la revendication 14 ou 15, **caractérisé en ce que** dans le sens longitudinal de l'outil d'usinage par enlèvement de copeaux (10), le premier porte-lame (20.1), le deuxième porte-lame (20.2), le quatrième porte-lame (20.4) et le troisième porte-lame (20.3) se suivent dans l'ordre cité.

17. Outil d'usinage par enlèvement de copeaux (10) selon l'une quelconque des revendications 14 à 16, **caractérisé en ce que** l'outil d'usinage par enlèvement de copeaux (10) présente par nervure de palier (LS, LS1, LS2) à usiner d'une voie de passage, au moins deux sections d'outil (10.1, 10.2) contiguës dans le sens longitudinal de l'outil d'usinage par enlèvement de copeaux (10).

18. Procédé d'usinage d'une voie de passage avec plusieurs nervures de palier (LS, LS1, LS2) agencées à distance dans le sens longitudinal à un diamètre nominal prédéfini au moyen d'un outil d'usinage par enlèvement de copeaux (10) selon la revendication 17, **caractérisé par** les étapes suivantes :
- l'entrée centrée et en ligne droite de l'outil d'usinage par enlèvement de copeaux (10) dans la voie de passage, dans lequel les porte-lames (20 ; 20.1-20.4) sont en position rétractée jusqu'à ce que les premiers porte-lames (20.1) des sections d'outil (10.1) soient positionnés pour l'usinage des nervures de palier (LS1) ;
- le réglage des porte-lames (20 ; 20.1-20.4) dans leur position déployée au moyen du dispositif de réglage (16),
- l'usinage de dégrossissage des nervures de palier (LS) au moyen des premiers porte-lames (20.1) par le mouvement rotatif du corps de base (12),
- le déplacement en ligne droite plus en avant encore de l'outil d'usinage par enlèvement de copeaux (10) jusqu'à ce que les deuxièmes porte-lames (20.2) des sections d'outil (10.1) soient positionnés pour l'usinage des nervures de palier (LS1),
- le montage d'un chanfrein unilatéral au niveau des nervures de palier (LS1) au moyen des deuxièmes porte-lames (20.2) par mouvement rotatif du corps de base (12),
- le réglage des porte-lames (20 ; 20.1-20.4) dans leur position rétractée au moyen du dispositif de réglage (16),
- le déplacement en ligne droite de l'outil de d'usinage par enlèvement de copeaux (10) dans le sens antagoniste jusqu'à ce que les troisièmes porte-lames (20.3) des sections d'outil contiguës (10.2) soient positionnés pour l'usinage des nervures de palier (LS1),
- le réglage des porte-lames (20 ; 20.1-20.4) dans leur position déployée au moyen du dispositif de réglage (16),
- l'usinage de semi-finition des nervures de palier (LS1) au moyen des troisièmes porte-lames (20.3) des sections d'outil (10.2) contiguës par mouvement rotatif du corps de base (12),
- le déplacement en ligne droite plus en avant encore de l'outil d'usinage par enlèvement de copeaux (10) jusqu'à ce que les quatrièmes porte-lames (20.4) des sections d'outil (10.2) contiguës soient positionnés pour l'usinage des nervures de palier (LS1),
- l'usinage de finition des nervures de palier (LS1) au moyen des quatrièmes porte-lames (20.4) des sections d'outil (10.2) contiguës par mouvement rotatif du corps de base (12),
- le déplacement en ligne droite plus en avant encore de l'outil d'usinage par enlèvement de copeaux (10) jusqu'à ce que les deuxièmes porte-lames (20.2) des sections d'outil (10.2) contiguës soient positionnés pour l'usinage des nervures de palier (LS1),
- le montage d'un chanfrein unilatéral au niveau des nervures de palier (LS) sur le côté, sur lequel aucun chanfrein n'a encore été monté, au moyen des deuxièmes porte-lames (20.2) des sections d'outil (10.2) contiguës par mouvement rotatif du corps de base (12),
- le réglage des porte-lames (20 ; 20.1-20.4) dans leur position rétractée au moyen du dispositif de réglage (16), et
- la sortie en ligne droite de l'outil d'usinage par enlèvement de copeaux (10) de la voie de passage.

19. Procédé selon la revendication 18, **caractérisé en ce que** les porte-lames (20 ; 20.1-20.4) sont réglés au moyen d'une tige de réglage agencée de manière mobile axialement dans le corps de base (12) de l'outil d'usinage par enlèvement de copeaux (10) du dispositif de réglage (16) radialement dans leur position rétractée et leur position déployée.
